# EUROPÄISCHE PATENTSCHRIFT

(11) **EP 4 115 224 B1**
(45) Veröffentlichungstag und Bekanntmachung des Hinweises auf die Patenterteilung: **18.02.2026**
(21) Anmeldenummer: 21710242.5
(22) Anmeldetag: 04.03.2021
(51) Int. Cl.: G02B 6/42, G01B 11/00, G01N 21/63, G02B 6/255

(54) **LOKALISIERUNG VON OPTISCHEN KOPPELSTELLEN**
LOCALIZATION OF OPTICAL COUPLING POINTS
LOCALISATION DE POINTS DE COUPLAGE OPTIQUE

(30) Priorität: 05.03.2020 DE 102020202821
(43) Veröffentlichungstag der Anmeldung: 11.01.2023
(73) Patentinhaber: Karlsruher Institut für Technologie, 76131 Karlsruhe (DE)
(72) Erfinder: BLAICHER, Matthias, 76275 Ettlingen (DE); DIETRICH, Philipp-Immanuel, 76744 Wörth (DE); KOOS, Christian, 74936 Siegelsbach (DE)
(74) Vertreter: Altmann Stößel Dick Patentanwälte PartG mbB
(86) Internationale Anmeldenummer: PCT/EP2021/055415
(87) Internationale Veröffentlichungsnummer: WO 2021/175967

(56) Entgegenhaltungen:
- EP-A2- 0 757 226
- WO-A1-2019/083773
- US-A1- 2006 067 625
- US-A1- 2017 336 326
- HASEGAWA M: "ALIGNMENT METHOD OF POLYMER WAVEGUIDE AND OPTICAL COMPONENT USING FLUORESCENCE", JAPANESE JOURNAL OF APPLIED PHYSICS, JAPAN SOCIETY OF APPLIED PHYSICS, JP, vol. 44, no. 33-36, 1 January 2005 (2005-01-01), pages L1085 - L1087, XP001238045, ISSN: 0021-4922, DOI: 10.1143/JJAP.44.L1085

## Beschreibung

### Gebiet der Erfindung

Die vorliegende Erfindung liegt auf dem Gebiet der optischen Verbindung von optischen Komponenten mittels einer optischen Koppelstelle und betrifft ein Verfahren und eine Anordnung zur Lokalisierung einer optischen Koppelstelle sowie ein Verfahren zur Erzeugung einer Mikrostruktur an einer optischen Koppelstelle. Bei den optischen Komponenten kann es sich beispielsweise um mikrooptische Bauteile wie Laser, optische Fasern, optische Chips mit passiven oder aktiven Wellenleitern, Fotodetektoren, Linsensysteme, oder optische Filter handeln. Andere Arten von optischen Komponenten sind denkbar. Die vorliegenden Verfahren und Anordnung sind insbesondere in der integrierten Optik und der optischen Aufbau- und Verbindungstechnik einsetzbar. Weitere Einsatzbereiche sind jedoch möglich.

### Stand der Technik

Aus dem Stand der Technik gemäss HASEGAWA M: "ALIGNMENT METHOD OF POLYMER WAVEGUIDE AND OPTICAL COMPONENT USING FLUORESCENCE",JAPANESE JOURNAL OF APPLIED PHYSICS, Bd. 44, Nr. 33-36, Seiten L1085-L1087 sind Verfahren und Anordnungen zur Lokalisierung einer optischen Koppelstelle bekannt. Abhängig von der Art der optischen Komponente können Lage und Orientierung der optischen Koppelstelle insbesondere mittels einer Kombination aus Kamerabildern und einem konfokalen Detektionsverfahren eines bildgebenden Systems erfasst werden, das Teil eines Lithographiesystems sein kann. Hierbei kann es oftmals erforderlich sein, dass die optischen Komponenten transparent für das zur Detektion der Koppelstelle verwendete Licht sind und/oder einen Kontrast in Bezug auf Brechungsindex, Farbe oder Reflexion aufweisen, der mittels einer bildgebenden optischen Einrichtung erkennbar ist. In vielen Materialsystemen ist dies jedoch nicht der Fall. Im Bereich der integrierten Optik zeigen zum Beispiel Glasfasern, optische Faserarrays oder Materialsysteme für integriert-optische Chips einen sehr geringen Brechungsindexkontrast, der eine Erkennung von Wellenleitern an der optischen Koppelstelle deutlich erschwert. Darüber hinaus können optische Chips oder einzelne Schichten dieser Chips bei den zur Detektion der Koppelstellen verwendeten Wellenlängen nicht transparent sein; dies trifft insbesondere dann zu, wenn der zu detektierende Wellenleiter durch Metallisierungen verdeckt wird. Zudem verfügen viele optische Komponenten nicht über optisch nachweisbare Zusatzstrukturen, wie z.B. Justiermarken, anhand derer sich Lage und/oder Orientierung der optischen Koppelstelle ermitteln lässt.

Wie in Katagiri, T. et al., Optical microscope observation method of a single-mode opticalfiber core for precise coreaxis alignment, Journal of Lightwave Technology, 2(3), 1984, S. 277-28, beschrieben, stellt sich insbesondere bei Glasfasern häufig die technische Anforderung, deren Kerne möglichst präzise zu erkennen, was vor allem bei einem Zusammenfügen zweier Glasfasern in sogenannten "Spleißverfahren" erforderlich ist. Trotz des niedrigen Brechungsindexkontrasts üblicher Glasfasern können Grenzflächen zwischen Faserkern und Mantel der Glasfaser bei geeigneter rückseitiger kollimierter Flutbelichtung in optischen Mikroskopen bei Aufsicht durch eine leichte Schattenbildung erkannt werden. Hierbei ist es erforderlich, dass sich die Faserachse näherungsweise in der Fokusebene des Mikroskops befindet. In vielen Fällen ist es jedoch nicht möglich, eine rückseitige kollimierte Flutbelichtung umzusetzen. So sind in optischen Modulen, wie z.B. optischen Transmittern, Glasfasern und Wellenleiter zumeist auf nicht-transparenten Substraten befestigt, so dass eine rückseitige Beleuchtung nicht möglich ist. In weiteren Fällen sind die Glasfasern zu Faserarrays zusammengefasst, so dass ein schwacher Kernschatten von anderen optisch kontrastreicheren Strukturen des Faserarrays überlagert wird und so eine Erkennung wesentlich erschwert.

US 2006/0067625 A1 offenbart eine Vorrichtung und Verfahren, die eine optische Verbindung zwischen einem Wellenleiter und einer optischen Verbindungskomponente einstellen, die Licht in den Wellenleiter einleitet oder vom Wellenleiter emittiertes Licht empfängt. Die Vorrichtung umfasst eine Anregungslichtquelle, die über die optische Verbindungskomponente Licht in den Wellenleiter emittiert, das den Wellenleiter dazu veranlasst, zu fluoreszieren; eine Beobachtungseinheit, die den Wellenleiter von einer Seitenfläche aus beobachtet, wobei sich diese Seitenfläche von der Endfläche unterscheidet, über die Licht in den Wellenleiter eingekoppelt wird oder aus diesem emittiert wird, und die Fluoreszenzlicht empfängt, das von dem Wellenleiter emittiert wird; und eine Verbindungseinstellkomponente, die die optische Verbindung zwischen der optischen Verbindungskomponente und dem Wellenleiter basierend auf der Intensität des empfangenen Fluoreszenzlichts einstellt.

WO 2017/059960 A1 offenbart ein weiteres Verfahren zur Erkennung des Faserkerns einer Glasfaser in Aufsicht auf eine Facette, wobei die Blickrichtung senkrecht zu der Facette und parallel zur Achse des Faserkerns ausgerichtet ist. Um die Sichtbarkeit des Faserkerns an einem Ende zu verbessern, kann vom anderen Ende der Faser her zusätzlich Licht in den Faserkern eingekoppelt werden. Allerdings ist es notwendig, das aus dem Faserkern ausgekoppelte Licht durch das zur Bildgebung verwendete System einzusammeln. Dies gestaltet sich insbesondere schwierig, wenn zur Bildgebung die Optik eines LithographieSystems verwendet werden soll. Häufig befinden sich die Achsen der Glasfaser bzw. des zu lokalisierenden optischen Wellenleiters in der Fokusebene des Lithographie-Systems, so dass das entlang der Achse ausgekoppelte Licht selbst mit Hilfe von Objektiven hoher numerischer Apertur nicht nachweisbar ist.

WO 2018/024 872 A1 offenbart ein Verfahren und eine Vorrichtung zur lithographischen Erzeugung einer Zielstruktur an einer nicht-planaren Ausgangsstruktur durch Belichten eines Photoresists mittels mindestens eines Lithographiestrahls. Das Verfahren umfasst die folgenden Schritte: a) Erfassen einer Topographie einer Oberfläche einer nicht-planaren Ausgangsstruktur; b) Verwenden mindestens eines Test-Parameters für den Lithographiestrahl und Ermitteln einer Wechselwirkung des Lithographiestrahls mit der Ausgangsstruktur sowie der hierdurch hervorgerufenen Veränderung des Lithographiestrahls und/oder der zu erzeugenden Zielstruktur; c) Bestimmen mindestens eines Korrektur-Parameters für den Lithographiestrahl derart, dass die durch die Wechselwirkung des Lithographiestrahls mit der Ausgangsstruktur verursachte Veränderung des Lithographiestrahls und/oder der zu erzeugenden Zielstruktur verringert wird; und d) Erzeugen der gewünschten Zielstruktur an der Ausgangsstruktur durch Belichten des Photoresists mittels des mindestens einen Lithographiestrahls unter Verwendung des mindestens einen Korrektur-Parameters für den Lithographiestrahl.

Wie z.B. in Barry R. Masters, Review of Handbook of Biological Confocal Microscopy, Third Edition, Journal of Biomedical Optics 13(2), 029902, 2008, beschrieben, können bildgebende Verfahren aus dem Bereich der Fluoreszenz-Mikroskopie ebenfalls zur Lokalisierung einer optischen Koppelstelle verwendet werden. Hierzu kann FluoreszenzStrahlung in einer zu untersuchenden Probe ortsaufgelöst angeregt und/oder ortsaufgelöst nachgewiesen und der sich daraus ergebende Kontrast zur Bildgebung verwendet werden.

Nach Denk, Winfried, James H. Strickler, and Watt W. Webb, Two-photon laser scanning fluorescence microscopy, Science Vol. 248, No. 4951, 1990, S. 73-76, kann die ortsaufgelöste Anregung auch mittels Mehrphotonen-Absorptionsprozessen erfolgen.

### Aufgabe der Erfindung

Ausgehend hiervon, besteht die Aufgabe der vorliegenden Erfindung darin, ein Verfahren und eine Anordnung zur Lokalisierung einer optischen Koppelstelle sowie ein Verfahren zur Erzeugung einer Mikrostruktur an der optischen Koppelstelle bereitzustellen, welche die aufgeführten Nachteile und Einschränkungen des Standes der Technik zumindest teilweise überwinden. Das Verfahren und die zugehörige Anordnung sollen insbesondere zum Einsatz in Lithographie-Systemen geeignet sein, mit denen sich sehr präzise an der optischen Koppelstelle ausgerichtete Strukturen wie z.B. optische Wellenleiter, Linsen, Spiegel oder andere funktionale Elemente, die optisch an die zu detektierenden Koppelstelle angebunden oder hierzu ausgerichtet sind, erzeugen lassen. Um möglichst geringe Koppelverluste bei der optischen Verbindung zwischen der zu lokalisierenden optische Koppelstelle und den lithographisch erzeugten Strukturen zu erreichen, ist eine möglichst präzise Lokalisierung der optischen Koppelstelle bzgl. Position und Orientierung im Koordinatensystem der Lithographie-Einheit wünschenswert. Hierzu sind eine relative Positionierungstoleranz von bevorzugt besser als 1 µm, besonders bevorzugt besser als 200 nm, insbesondere besser als 50 nm, besonders wünschenswert.

### Offenbarung der Erfindung

Diese Aufgabe wird durch ein Verfahren und eine Anordnung zur Lokalisierung einer optischen Koppelstelle sowie durch ein Verfahren zur Erzeugung einer Mikrostruktur an der optischen Koppelstelle mit den Merkmalen der unabhängigen Patentansprüche gelöst. Vorteilhafte Weiterbildungen, welche einzeln oder in beliebiger Kombination realisierbar sind, sind in den abhängigen Ansprüchen dargestellt.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken.

In einem ersten Aspekt betrifft die vorliegende Erfindung ein Verfahren zur Lokalisierung einer optischen Koppelstelle, das die folgenden Schritte umfasst, welche vorzugsweise in der angegebenen Reihenfolge, beginnend mit Schritt a) und endend mit Schritt d), durchgeführt werden, wobei ein oder mehrere, insbesondere unmittelbar aufeinanderfolgende Schritte, zumindest teilweise auch gleichzeitig durchgeführt werden können:
a) Bereitstellen einer optischen Komponente, welche eine optische Koppelstelle umfasst, wobei die optische Koppelstelle einen Wechselwirkungsbereich aufweist, der außerhalb eines von der optischen Komponente umfassten Volumens liegt;
b) Erzeugen einer optischen Strahlung in einem Erzeugungsbereich, wobei der Erzeugungsbereich zumindest teilweise mit dem Wechselwirkungsbereich der optischen Koppelstelle überlappt, wobei ein sich in dem Erzeugungsbereich befindliches Medium mit Licht beaufschlagt wird, das derart von dem Medium modifiziert wird, dass dadurch das Erzeugen der optischen Strahlung erfolgt;
c) Erfassen zumindest eines Teils der erzeugten optischen Strahlung in einem Erfassungsbereich, wobei der Erfassungsbereich zumindest teilweise mit dem Wechselwirkungsbereich der optischen Koppelstelle überlappt, und Ermitteln einer ortsaufgelösten Verteilung des erfassten Teils der erzeugten optischen Strahlung; und
d) Bestimmen der Lokalisierung der optischen Koppelstelle aus der ermittelten ortsaufgelösten Verteilung des erfassten Teils der erzeugten optischen Strahlung,
wobei das Erfassen zumindest eines Teils der erzeugten optischen Strahlung durch die optische Koppelstelle hindurch erfolgt.

Gemäß Schritt a) erfolgt eine Bereitstellung einer optischen Komponente. Der Begriff der "optischen Komponente" bezeichnet mindestens ein optisches Element, das zum Aussenden, Empfangen, Verändern oder Übertragen von Licht ausgelegt ist. Die optische Komponente kann beispielsweise eine Glasfaser umfassen oder auch beispielsweise auf einem planaren oder auf einem nicht-planaren Substrat aufgebracht und bevorzugt durch ein zwei- oder dreidimensionales Mikrostrukturierungsverfahren herstellbar sein. Im Falle einer im wesentlichen planaren Struktur kann die optische Komponente ggf. auch als "optischer Chip" bezeichnet werden. Eine optische Komponente kann hierbei eine einzige oder eine Mehrzahl von optischen Elementen umfassen. Bevorzugt ist die optische Komponente ausgewählt aus der Gruppe umfassend lichtleitende Einmoden- oder Mehrmodenfasern aus organischen oder anorganischen Materialien, halbleiterbasierte integriert-optische Chips, insbesondere Laser, optische Verstärker, Fotodioden, Superlumineszenz-Dioden oder Siliziumphotonik-Chips, integriert-optische Chips auf Basis von Halbleitern oder dielektrischen Materialien, bevorzugt Gläsern, Siliziumdioxid, Siliziumnitrid oder Polymeren; optische Leiterplatten, oder optische Elemente für die Freistrahl-Optik, insbesondere Linsen, Strahlteiler, Isolatoren, Dünnschichtfilter, Spiegel, oder Beugungsgitter. Die optischen Komponenten können optische Wellenleiter mit geringem Indexkontrast, z.B. glasbasierte optische Wellenleiter, oder Wellenleiter mit mittlerem oder hohem Indexkontrast, z.B. halbleiterbasierte Wellenleiter, aufweisen. Weitere Arten von optischen Komponenten sind denkbar, insbesondere Filter, Leistungsteiler oder elektrooptische Modulatoren. Die optische Komponente kann weiterhin grundsätzlich beliebige Kombinationen der genannten optischen Elemente umfassen.

Die gemäß Schritt a) bereitgestellte optische Komponente umfasst eine optische Koppelstelle. Der Begriff der "optischen Koppelstelle" bezeichnet einen Teilbereich der zu verbindenden optischen Komponente, über welchen Licht in die Komponente eingekoppelt werden kann oder aus dieser emittiert werden kann. In einfachen optischen Komponenten, wie z.B. optischen Fasern oder kantenemittierenden integriert-optischen Chips, wird die optische Koppelstelle oft auch als "Facette". oder "Wellenleiterfacette" bezeichnet. Bei Fotodioden ist die optische Koppelstelle oftmals identisch mit einer so genannten "aktiven Fläche" des zum Nachweis verwendetenpn-Übergangs, innerhalb der das eingestrahlte Licht zur Erzeugung eines elektrischen Signals führt. Bei Lasern kann es sich um die lichtemittierende Fläche an der Kante oder auf der Oberfläche des entsprechenden Chips handeln. Komplexere Ausführungen von optische Koppelstellen können beispielsweise als sogenannte Gitterkoppler (siehe Taillaert, Dirk, Peter Bienstman, and Roel Baets, Compact efficient broadband grating coupler for silicon-on-insulator waveguides, Optics Lett. 29 (23), 2004, S. 2749-51) in der Siliziumphotonik oder als so genannte "inverse Taper" oder geätzte Mikrospiegel (siehe Behfar, Alex et al., Horizontal cavity surface-emitting laser (HCSEL) devices, Vertical-Cavity Surface-Emitting Lasers IX. Vol. 5737, International Society for Optics and Photonics, 2005, ausgestaltet sein. Die optischen Koppelstellen können bereits durch Mehrphotonen-Polymerisation erzeugte strahlformende Elemente umfassen oder mit diesen versehen sein.

Die optische Koppelstelle weist einen Wechselwirkungsbereich auf. Der Begriff des "Wechselwirkungsbereichs" der optischen Koppelstelle betrifft hierbei einen Raumbereich, der optisch mit der Koppelstelle in Wechselwirkung steht. Ein ausgewählter Punkt eines Raumbereichs steht dann in Wechselwirkung mit der optischen Koppelstelle,
(1) wenn aus der optischen Koppelstelle emittiertes Licht den ausgewählten Punkt des Raumbereichs zumindest teilweise erreichen kann, oder
(2) wenn optische Strahlung, die von einer an dem ausgewählten Punkt des Raumbereichs platzierten isotrop strahlenden Punktlichtquelle emittiert wird, zumindest teilweise in die optische Koppelstelle eingekoppelt werden kann.

In Fall (1) liegt der ausgewählte Punkt des Raumbereichs innerhalb eines so genannten "Emissionsbereichs" der optischen Koppelstelle, in Fall (2) innerhalb eines so genannten "Akzeptanzbereichs" der optischen Koppelstelle. Der Emissionsbereich der Koppelstelle kann dabei in Anlehnung an eine gängige Definition bei sog. "Gauß-Strahlen" wie folgt beschrieben werden: Ein Punkt gehört dann zum Emissionsbereich der optischen Koppelstelle, wenn die in dem Punkt gemessene Intensität des von der optischen Koppelstelle abgestrahlten Lichts mehr als das 1/e²-fache des maximalen Intensitätswertes beträgt, der im gleichen Abstand von der optischen Koppelstelle, beispielsweise auf der Achse des Gauß-Strahls gemessen wird. In ähnlicher Weise lässt sich der Akzeptanz-bereich wie folgt definieren: Ein Punkt gehört dann zum Akzeptanzbereich der optischen Koppelstelle, wenn eine Einkoppeleffizienz des von einer Punktlichtquelle in dem Punkt emittierten Lichtes mehr als das 1/e²-fache der maximalen Einkoppeleffizienz beträgt, die von einer im gleichen Abstand von der optischen Koppelstelle optimal positionierten Punktlichtquelle, beispielsweise auf der Achse des Gauß-Strahls, erreicht wird. Abhängig vom jeweiligen Anwendungsfall kann anstelle des genannten Faktors von 1/e² auch ein anderer Faktor, beispielsweise 0.01 (-20 dB) oder 0.001 (-30 dB), verwendet werden. Der Wechselwirkungsbereich, der jeweils einer ausgewählten optischen Koppelstelle zugeordnet ist, kann alternativ somit auch als "Akzeptanzbereich" oder als "Emissionsbereich" bezeichnet werden. In einer besonders bevorzugten Ausgestaltung der vorliegenden Erfindung liegt der Wechselwirkungsbereich außerhalb eines von der optischen Komponente umfassten Volumens. In einer alternativen Ausgestaltung kann der Wechselwirkungsbereich jedoch ganz oder teilweise auch das Volumen der optischen Komponente oder eines von der optischen Komponente umfassten Wellenleiterkerns umfassen. Im Fall einer beispielhaften optischen Komponente, die einen einfachen Wellenleiter umfasst, an dessen Ende die optische Koppelstelle angeordnet ist, kann der Wechselwirkungsbereich ein kegelförmiges Volumen, das auch als "Akzeptanzkonus" oder "Emissionskonus" bezeichnet wird, aufweisen.

Gemäß Schritt b) erfolgt ein Erzeugen einer optischen Strahlung in einem Raumbereich, der als "Erzeugungsbereich" bezeichnet. Die Begriffe "Erzeugen" und "Erzeugung" in Bezug auf die optische Strahlung bezeichnen eine Bereitstellung einer optischen Strahlung, insbesondere durch Einstrahlung von Licht in den Erzeugungsbereich, wobei das Licht im Erzeugungsbereich derart modifiziert werden kann, dass hierdurch das Erzeugen der optischen Strahlung erfolgt. Zur Erzeugung der Strahlung können hierbei verschiedene Effekte genutzt werden, die beispielsweise auf Lichtstreuung, Phosphoreszenz, Fluoreszenz, Lumineszenz oder verwandten Prozessen beruhen. Bei Prozessen, die auf Lichtabsorption und nachgelagerter Emission beruhen, kann auch die gleichzeitige oder sequentielle Absorption mehrerer Photonen genutzt werden. Hierbei kann die Bereitstellung der zur Anregung verwendeten optischen Strahlung durch die optische Koppelstelle selbst oder durch ein gesondertes optisches System, das zur Erzeugung eines Laserstrahls eingerichtet sein kann, erfolgen.

Der Begriff "Licht" bezeichnet Photonen, die durch eine Lichtquelle bereitgestellt werden und die in dem Erzeugungsbereich die gewünschte optische Strahlung erzeugen. Das Licht, das zur Erzeugung der optischen Strahlung in den Erzeugungsbereich eingestrahlt wird, kann als optische Wellen mit konstanter Leistung oder in Form von kurzen Lichtpulsen bereitgestellt werden, d.h. die Lichtquelle kann als Dauerstrich-Lichtquelle oder als Pulslichtquelle ausgestaltet sein. Im Falle einer gepulsten Lichtquelle können Lichtpulse mit einer Pulsdauer von bevorzugt höchstens 10 ps, bevorzugt von höchstens 1 ps, besonders bevorzugt höchstens 200 fs, insbesondere höchstens 100 fs, bei einer Wiederholrate von bevorzugt mindestens 1 MHz, bevorzugt von 10 MHz, besonders bevorzugt von mindestens 25 MHz, insbesondere von mindestens 100 MHz, verwendet werden. Hierfür eignen sich insbesondere Laserlichtquellen ausgewählt aus faserbasierten Femtosekundenlasern oder gepulsten Festkörperlasern wie Titan:Saphir-Laser oder Diodenlaser, die sich mit Frequenzkonversionseinheiten, beispielsweise zur Frequenzverdoppelung, zur Summenfrequenzerzeugung oder zur Differenzfrequenzerzeugung kombinieren lassen. In dieser bevorzugten Ausgestaltung kann die Lichtquelle insbesondere dazu eingesetzt werden, die Lumineszenz von Mehrphotonen-Absorptionsprozessen anzuregen. Beispielsweise lassen sich hierbei auch mehrstufige Absorptionsprozesse zur Anregung der LumineszenzStrahlung nutzen, wobei ein Teil des Anregungs- oder Abregungslichtes über die optische Komponente und ein weiterer Teil über das Objektiv in den Erzeugungsbereich eingestrahlt werden kann.

Die optische Strahlung, die gemäß Schritt b) erzeugt wird, kann grundsätzlich jede Art von optischer Strahlung, die eine Wellenlänge im Bereich des optischen Spektrums oder eines angrenzenden Spektralbereichs aufweist, umfassen. Während das sichtbare optische Spektrum Wellenlängen von 380 nm bis 780 nm aufweist, umfassen der infrarote Spektralbereich Wellenlängen von 780 nm bis 1 mm, insbesondere von 780 nm bis 3 µm, (Nahinfrarot, "NIR") oder von 3 µm bis 8 µm von (mittleres Infrarot, "MIR"), und der ultraviolette Spektralbereich Wellenlängen von 1 nm bis 400 nm, bevorzugt von 100 nm bis 400 nm, insbesondere von 400 nm bis 315 nm ("UV-A"), von 315 nm bis 280 nm ("UV-B") oder von 280 nm bis 100 nm ("UV-C").

Gemäß Schritt b) überlappt der Erzeugungsbereich zumindest teilweise mit dem Wechselwirkungsbereich der optischen Koppelstelle. Hierbei können die beiden Bereiche einen Überlappungsbereich aufweisen, der kleiner ist als jeder der beiden Bereiche; alternativ können die beiden Bereiche völlig identisch sein oder einer der Bereiche vom jeweils anderen vollständig umfasst sein.

Gemäß Schritt c) erfolgt ein Erfassen zumindest eines Teils der erzeugten optischen Strahlung in einem Erfassungsbereich sowie ein Ermitteln einer ortsaufgelösten Verteilung des erfassten Teils der erzeugten optischen Strahlung, wobei der Erfassungsbereich zumindest teilweise mit dem Wechselwirkungsbereich der Koppelstelle überlappt. Auch hier können die beiden Bereiche einen Überlappungsbereich aufweisen, der kleiner ist als jeder der beiden Bereiche; alternativ können die beiden Bereiche völlig identisch sein oder einer der Bereiche vom jeweils anderen vollständig umfasst sein.

Die Begriffe "Erfassen" und "Erfassung" in Bezug auf die erzeugte optische Strahlung bezeichnen eine messtechnische Aufnahme der optischen Strahlung oder eines Teils hiervon, insbesondere in Bezug auf deren Leistung, wobei die erfasste Strahlung vor der Bestimmung der Leistung weiteren Modifikationen, insbesondere einer Filterung in Bezug auf eine Wellenlänge oder eine Polarisation, unterzogen werden kann. In einem Fall, in dem die optische Koppelstelle zur Erfassung der erzeugten optischen Strahlung eingesetzt wird, kann messtechnisch aufgenommen werden, wie gut die optische Strahlung aus einem jeweiligen Erzeugungsort im Erzeugungsbereich in die optische Koppelstelle einkoppeln kann. In einem weiteren Fall, in dem ein gesondertes optisches System zur Erfassung der erzeugten optischen Strahlung eingesetzt wird, kann das optische System insbesondere eine Leistung der optischen Strahlung oder eines Teils davon an einem jeweiligen Erzeugungsort im Erzeugungsbereich messtechnisch aufnehmen. In beiden Fällen ist es ausreichend, dass ein Teil der in einem Überschneidungsbereich des Erzeugungsbereichs mit dem Erfassungsbereich erzeugten optischen Strahlung erfasst wird, während ein anderer Teil der optischen Strahlung in Raumrichtungen abgestrahlt werden kann, die nicht von einer zur Erfassung der optischen Strahlung eingerichteten Messeinheit erfasst werden können.

In Bezug auf die ortsaufgelöste Verteilung betreffen die Begriffe "Ermitteln" und "Ermittlung" eine Bestimmung der ortsaufgelösten Verteilung des im Erfassungsbereich erfassten Teils der erzeugten optischen Strahlung, insbesondere durch Nachweis und Auswertung von aufgenommenen Messwerten und/oder durch Anwendung eines Modells für die optische Koppelstelle oder den Wechselwirkungsbereich der optischen Koppelstelle. Der Begriff der "ortsaufgelösten Verteilung" in Bezug auf eine optische Strahlung bezeichnet eine Größe, welche als Funktion einer räumlichen Position, bevorzugt in Form eines Positionsvektors in einem dreidimensionalen Koordinatensystem, innerhalb eines Raumbereichs angegeben wird. Als Größe kann hierbei insbesondere ortsabhängig eine Leistung der erfassten optischen Strahlung oder eine Einkoppeleffizienz der von dem optischen System an der jeweiligen räumlichen Position erzeugten optischen Leistung verwendet werden.

Gemäß Schritt d) erfolgt die gewünschte Bestimmung der Lokalisierung der optischen Koppelstelle aus der während Schritt c) ermittelten ortsaufgelösten Verteilung des innerhalb des Erfassungsbereichs erfassten Teils der erzeugten optischen Strahlung. Der Begriff der "Lokalisierung" umfasst sowohl eine Angabe zu einer räumlichen Position als auch zu einer Orientierung der optischen Koppelstelle oder des Wechselwirkungsbereichs der optischen Koppelstelle. Hierbei können die Angaben zur räumlichen Position insbesondere einen Positionsvektor in einem Koordinatensystem, bevorzugt einem dreidimensionalen Koordinatensystem, umfassen. Die Angaben zur Orientierung können insbesondere einen oder mehrere dreidimensionale Orientierungsvektoren, besonders bevorzugt in demselben Koordinatensystem, das auch für die Angabe des Positionsvektors verwendet wird, umfassen, wobei einer der Orientierungsvektoren vorzugsweise eine Richtung angibt, in welcher Licht aus der optischen Koppelstelle abgestrahlt werden kann oder aus welcher eine effiziente Einkopplung des Lichts in die optische Koppelstelle möglich ist. Wie unten näher erläutert, können in einer besonders bevorzugten Ausgestaltung der Positionsvektor und der Orientierungsvektor in einem dreidimensionalen Koordinatensystem angegeben werden, das durch ein in einem Lithographie-Verfahren eingesetzten Lithographie-System festgelegt wird. Bei divergierenden Strahlen kann zur Beschreibung der Orientierung der optischen Koppelstelle oder des Wechselwirkungsbereichs der optischen Koppelstelle eine optische Achse eines von der optischen Koppelstelle emittierten Strahlenbündels oder eines von der optischen Koppelstelle empfangenen Strahlenbündels verwendet werden. Zusätzlich kann mindestens ein weiterer Orientierungsvektor angegeben werden, insbesondere ein Orientierungsvektor, der eine rotatorische Ausrichtung der Koppelstelle in Bezug auf eine optische Achse definiert, und der somit insbesondere eine Raumrichtung einer Polarisation des von der Koppelstelle emittierten oder von ihr erfassten Lichts angibt.

In Bezug auf die Lokalisierung der optischen Koppelstelle bezeichnen die Begriffe "Bestimmen" oder "Bestimmung" eine Ermittlung einer Größe aus anderen Größen, die messtechnisch erfasst wurden oder aufgrund eines Modells ermittelt wurden. Aus der während Schritt c) ermittelten ortsaufgelösten Verteilung des im Erfassungsbereich erfassten Teils der erzeugten optischen Strahlung lassen sich somit sowohl die Position als auch die Orientierung der optischen Koppelstelle bestimmen. Zusätzlich zu der Position und der Orientierung der optischen Koppelstelle können darüber hinaus noch Informationen über eine laterale Form des Wechselwirkungsbereichs und/oder sonstige ortsabhängige Eigenschaften der Wechselwirkung, wie z.B. eine Polarisationsabhängigkeit, gewonnen werden. Zumeist kann aus der gemäß Schritt c) bestimmten ortsabhängigen Verteilung der im Erfassungsbereich erfassten Leistung direkt auf die Position und die Orientierung der optischen Koppelstelle oder des Wechselwirkungsbereichs der optischen Koppelstelle geschlossen werden. Die Position der Koppelstelle kann hierbei oftmals ein Ort kleinster lateraler Ausdehnung des Wechselwirkungsbereichs darstellen, zum Beispiel eine Spitze eines konischen Raumbereichs. Alternativ oder zusätzlich kann zur Bestimmung der Position und der Orientierung der optischen Koppelstelle eine Beobachtung oder modellbasierte Erwartung einfließen, dass innerhalb der optischen Komponente, insbesondere innerhalb eines von ihr umfassten Wellenleiters, keine nennenswerte Anregung von optischer Strahlung erfolgt. Dadurch tritt in der Regel an der Koppelstelle ein Auftreten oder Verschwindender der erfassten optischen Strahlung, insbesondere in Form eines abrupten Kontrasts, auf, welche zur Bestimmung der Position der optischen Koppelstelle eingesetzt werden kann. Erfolgt eine lokale Anregung der optischen Strahlung durch ein gesondertes, ein Objektiv umfassendes optisches System, so kann es besonders vorteilhaft sein, zusätzlich zu der durch die optische Koppelstelle hindurch in die optische Komponente eingekoppelten Strahlung auch Teile der in einem Medium insgesamt erzeugten, jedoch nicht durch die optische Koppelstelle hindurch in die optische Komponente eingekoppelten und dort erfassten Strahlung zu detektieren. Eine Detektion kann hierbei mittels des zur Anregung verwendeten Objektivs oder mittels eines zusätzlichen Objektivs erfolgen. Darüber hinaus ist ein für die optische Koppelstelle zu erwartender Wechselwirkungsbereich in der Regel berechenbar oder modellierbar, insbesondere durch Anwendung der Kirchhoffschen Beugungsintegrals. Durch Vergleich des modellbasierten Wechselwirkungsbereichs bzw. der modellbasierten Verteilung der erfassten optischen Leistung mit der messtechnisch innerhalb des Erfassungsbereichs bestimmten optischen Leistung kann hierbei auf die Position der optischen Koppelstelle und ihres Wechselwirkungsbereichs geschlossen werden. Damit wird es möglich, die Position und die Orientierung der optischen Koppelstelle zu bestimmen, ohne dass der die optische Koppelstelle umfassende Abschnitt des Raumbereichs tatsächlich messtechnisch erfasst wird. Die Position und die Orientierung der optischen Koppelstelle lässt sich dann beispielsweise durch eine Extrapolation der im Wechselwirkungsbereich bestimmten Verteilung der erfassten Strahlung ermitteln. So ist es beispielsweise ausreichend, bei einem konusförmigen Wechselwirkungsbereich nur den aufgeweiteten Bereich des Konus zu erfassen, während die Position der Spitze des Konus durch Extrapolation bestimmt wird. In einer besonderen Ausgestaltung kann die Lokalisierung der optischen Koppelstelle bei einer von der Betriebswellenlänge der optischen Komponente verschiedenen Wellenlänge der erzeugten Strahlung und/oder des zu ihrer Erzeugung verwendeten Lichts bestimmt werden. In dieser Ausgestaltung können chromatische Effekte, wie zum Beispiel eine von der Wellenlänge abhängige Brechung der optischen Strahlung an einer Grenzfläche auftreten, die durch ein Modell kompensiert werden können. In einer weiteren Ausgestaltung sind die Position und die Orientierung der optischen Koppelstelle hinreichend wellenlängenunempfindlich, so dass es keiner Kompensation chromatischer Effekte bedarf. Erfindungsgemäß ist es unerheblich, auf welche Art die Erzeugung der optischen Strahlung im Erzeugungsbereich erfolgt, solange das Erfassen der ortsaufgelösten Verteilung der optischen Strahlung, d.h. das Erfassen der ortsaufgelösten Verteilung der optischen Strahlung, durch die optische Koppelstelle hindurch erfolgt. In diesem Fall kann die ortsaufgelöste Verteilung der durch die Koppelstelle hindurch erfassten optischen Strahlung beispielsweise dadurch bestimmt werden, dass die optische Strahlung sequentiell an verschiedenen Punkten innerhalb oder außerhalb des Wechselwirkungsbereiches mit bekannter räumlicher Verteilung erzeugt wird, und die durch die Koppelstelle hindurch messetechnisch erfasste optische Leistung die Ortsabhängigkeit der Einkoppeleffizienz und damit die Form des Wechselwirkungsbereichs widerspiegelt. Der Begriff "durch die optische Koppelstelle hindurch" bezeichnet hierbei eine erfindungsgemäße Ausgestaltung in Bezug auf die Führung der optischen Strahlung oder des die optische Strahlung erzeugenden Lichts in einer Weise, dass die optische Strahlung oder das die optische Strahlung erzeugende Licht die optische Koppelstelle tatsächlich durchquert. Nur so kann sichergestellt werden, dass die ortsaufgelöste Verteilung der erfassten optischen Strahlung tatsächlich die Lokalisierung der optischen Koppelstelle bzw. des zugehörigen Wechselwirkungsbereichs angibt.

Für die Erzeugung der optischen Strahlung in dem Erzeugungsbereich umfasst der Erzeugungsbereich zumindest teilweise ein Medium, welches das eingestrahlte Licht derart modifiziert, dass dadurch das Erzeugen der optischen Strahlung erfolgt. Hierzu kann der Erzeugungsbereich ganz oder teilweise von dem Medium ausgefüllt sein, wobei sich der Begriff des "Mediums" auf eine Substanz bezieht, welche zur Erzeugung der optischen Strahlung aus dem in den Erzeugungsbereich eingestrahlten Licht eingerichtet ist. Durch die Bereitstellung des Mediums im Erzeugungsbereich kann somit insbesondere das Problem gelöst werden, dass von der optischen Komponente emittiertes Licht häufig nicht effizient in das Objektiv eingekoppelt werden kann oder dass umgekehrt das durch ein Objektiv in den Raumbereich eingestrahlte Licht häufig nicht effizient in die optische Komponente eingestrahlt werden kann. Hierbei kann das Medium in vorteilhafter Weise einen Überschneidungsbereich des Erzeugungsbereichs und des Erfassungsbereichs ganz oder zumindest teilweise ausfüllen. In einer besonders bevorzugten Ausgestaltung kann zeitlich nacheinander jeweils ein Teilbereich des Erzeugungsbereichs oder des Erfassungsbereichs adressiert werden. Hierzu kann ein Rasterverfahren oder ein Scanverfahren dienen, das beispielsweise eine relative Position des Objektivs zu der optischen Komponente verändern kann. Alternativ kann auch mit ortsfesten Objektiven gearbeitet und eine Rasterung mit Hilfe von Scanspiegeln erreicht werden, mit deren Hilfe sich bestimmte Teilbereiche des Erzeugungsbereichs oder des Erfassungsbereichs adressieren lassen. Alternativ oder zusätzlich hinaus können auch Detektorarrays oder Bildsensoren, wie z.B. CCD oder CMOS-Arrays in Kombination mit ortsfesten Objektiven zu einer räumlich aufgelösten Erfassung von Strahlung verwendet werden.

In einer bevorzugten Ausgestaltung kann das sich in dem Erzeugungsbereich befindliche Medium Streuzentren umfassen, welche eingestrahltes Licht derart streuen, dass hierdurch Streustrahlung erzeugt wird, die als die gewünschte optische Strahlung den Erfassungsbereich ganz oder zumindest teilweise ausfüllen kann. In einer alternativen, ebenfalls bevorzugten Ausgestaltung kann das sich in dem Erzeugungsbereich befindliche Medium einen lumineszierenden Farbstoff aufweisen, wobei der lumineszierende Farbstoff bei Beaufschlagung mit Licht Lumineszenz-Strahlung erzeugt, die als die gewünschte optische Strahlung den Erzeugungsbereich ebenfalls ganz oder zumindest teilweise erfüllen kann. Zur Anregung der Lumineszenz können hierbei Einphotonen- oder Mehrphotonen-Absorptionsprozesse verwendet werden. Der Begriff der "Lumineszenz" beschreibt hierbei Lichtemission durch eine Substanz, welche dazu eingerichtet ist, durch Absorption einer Energie in einen angeregten Zustand versetzt zu werden, wobei eine Rückkehr in den Grundzustand durch Emission von Strahlung erfolgt. Findet die Emission der Strahlung unmittelbar nach der Absorption des Lichtes statt, wird hierfür üblicherweise der Begriff "Fluoreszenz" verwendet, bei längerer Zeitdauer bis zur Rückkehr in den Grundzustand dagegen der Begriff "Phosphoreszenz". Andere Arten von Lumineszenz sind jedoch denkbar. Alternativ kann sich in dem Erzeugungsbereich auch ein zur Erzeugung des lumineszierenden Farbstoffs eingerichtetes Ausgangsmaterial befinden, wobei das Ausgangsmaterial bei Beaufschlagung mit dem eingestrahlten Licht zunächst den lumineszierenden Farbstoff erzeugt, welcher bei weiterer Beaufschlagung mit dem Licht dann die gewünschte Lumineszenz-Strahlung erzeugt, die als die optische Strahlung in dem Erzeugungsbereich entsteht. Weitere Arten von Medien sind denkbar.

In einer besonderen Ausgestaltung kann die optische Komponente das Medium, welches das eingestrahlte Licht so modifiziert, dass dadurch das Erzeugen der optischen Strahlung erfolgt, ganz oder teilweise umfassen. Hierbei kann das Medium bevorzugt innerhalb der optischen Komponente in Form eines Wellenleiterkernes vorliegen, in den streuende oder lumineszierende Substanzen eingebracht sind. Alternativ oder zusätzlich kann hierzu eine Eigenfluoreszenz des Materials des Wellenleiters verwendet werden.

In einer weiteren Ausgestaltung kann das Medium einen Fotolack umfassen, wobei eine zur Erzeugung der optischen Strahlung in den Fotolack eingebrachte Dosis vorzugsweise unterhalb einer Dosisschwelle zur Polymerisation des Fotolacks liegt. Anstelle des Begriffs "Fotolack" kann alternativ auch der Begriff "Photoresist" verwendet werden. Hierbei kann der Fotolack Streuzentren oder einen lumineszierenden Farbstoff umfassen. Hierbei kann bevorzugt eine Anregungswellenlänge, eine Leistung, eine Pulsform oder eine Bestrahlungsdauer zur Erzeugung der optischen Strahlung mittels des lumineszierenden Farbstoffes derart gewählt werden, dass kein unbeabsichtigtes Belichten des Fotolacks erfolgt. Nach erfolgter Lokalisierung der optischen Koppelstelle gemäß dem hierin beschriebenen Verfahren kann gemäß dem unten näher dargestellten Verfahren zur Erzeugung einer Mikrostruktur an der so lokalisierten optischen Koppelstelle eine Mikrostruktur hergestellt werden.

In einer bevorzugten Ausgestaltung der vorliegenden Erfindung kann das Licht von der optischen Komponente durch die optische Koppelstelle hindurch so emittiert werden, dass sich das Licht in den Wechselwirkungsbereich oder in den Emissionsbereich der optischen Koppelstelle ausbreitet und dort die gewünschte optische Strahlung erzeugt, die durch ein Objektiv hindurch ortsaufgelöst erfasst und ausgewertet wird. Da selbst mit Objektiven hoher numerischer Apertur (NA) eine direkte Erfassung des durch die optische Komponente abgestrahlten Lichts in der Regel nicht möglich ist, kann insbesondere durch Einführung von Streuzentren oder lumineszierenden Farbstoffen in den Wechselwirkungsbereich die gewünschte optische Strahlung im gesamten Wechselwirkungsbereich oder zumindest eines Teils davon erfasst werden. Durch eine räumlich aufgelöste Detektion der von dem Objektiv erfassten optischen Strahlung wird somit eine direkte Messung zumindest eines Teilbereichs des Wechselwirkungsbereichs der optischen Koppelstelle möglich. Die räumlich aufgelöste Detektion der optischen Strahlung kann nach bekannten Verfahren der Mikroskopie erfolgen, bevorzugt unter Verwendung einer Kamera oder eines konfokalen Mikroskops.

In einer weiteren bevorzugten Ausgestaltung der vorliegenden Erfindung kann das Licht von einem gesonderten, ein Objektiv umfassenden optischen System so emittiert werden, dass sich das Licht in den Wechselwirkungsbereich bzw. Akzeptanzbereich der optischen Koppelstelle ausbreitet und dort die gewünschte optische Strahlung erzeugt, die durch die optische Koppelstelle hindurch von der optischen Komponente erfasst und ausgewertet wird. Da selbst mit Objektiven hoher numerischer Apertur (NA) auch eine direkte Einkopplung des durch das Objektiv abgestrahlten Lichts in die optische Komponente in der Regel nicht möglich ist, kann insbesondere durch die oben beschriebene Einführung von Streuzentren oder lumineszierenden Farbstoffen in den Wechselwirkungsbereich der optischen Koppelstelle die gewünschte optische Strahlung in dem gesamten Wechselwirkungsbereich oder zumindest einem Teil davon erzeugt und in die optische Koppelstelle eingekoppelt werden. Die Erfassung der in die vorzugsweise einen Wellenleiter aufweisende optische Komponente eingekoppelten optischen Strahlung kann vorzugsweise direkt an einem Ausgang der optischen Komponente erfolgen. Hierzu kann an dem Ausgang der optischen Komponente bevorzugt eine Messeinheit, besonders bevorzugt einen Leistungsdetektor, insbesondere in Form eines optischen Leistungs-Messkopfes, angebracht sein kann, der zusätzlich mit Filtern, beispielsweise zur Erfassung bestimmter Wellenlängen oder Polarisationszustände, versehen sein kann. Diese Ausgestaltung kann insbesondere bei optischen Fasern, wie z.B. Einzel- oder Mehrkernfasern, vorteilhaft sein. Der Leistungsdetektor kann aber auch als Teil der optischen Komponente vorgesehen sein, zum Beispiel im Falle integrierter Fotodioden, welche dazu eingerichtet sein können, zumindest einen Teil der Leistung eines oder mehrerer Wellenleiter zu erfassen. Zusätzlich kann die eingekoppelte optische Strahlung auch durch das zur Anregung verwendete Objektiv selbst erfasst werden, wobei wie unten beschrieben, Auskoppelstellen auf der optischen Komponente selbst zum Einsatz kommen können. Alternativ können auch zusätzliche Objektive zum Erfassen der optischen Strahlung genutzt werden. Generell kann zur messtechnischen Erfassung der optischen Strahlung ein Lock-in Prinzip eingesetzt werden, um Hintergrundstrahlung, wie z.B. eine externe Beleuchtung, von zur Detektion der Koppelstelle erzeugter optischer Strahlung unterscheiden zu können.

In einer besonderen Ausgestaltung können Auskoppelstrukturen an der optischen Komponente, insbesondere auf einem von der optischen Komponente umfassten Wellenleiter, die innerhalb des vom Objektiv adressierbaren Sichtfelds liegen, dazu verwendet werden, einen Teil der in die optische Komponente eingekoppelten optischen Leistung wieder in Richtung des Objektivs derart abzustrahlen, so dass dieser durch das Objektiv hindurch erfasst werden kann. Hierzu kann auch Streustrahlung verwendet werden, die von dem Wellenleiter abgestrahlt wird, insbesondere in Folge von Imperfektionen, zum Beispiel Oberflächenrauigkeiten, des Wellenleiters oder durch für diesen Zweck erzeugte Streustrukturen. In dieser besonderen Ausgestaltung kann die im Wechselwirkungsbereich der Koppelstelle erzeugte optische Strahlung eine Wellenlänge aufweisen, die sich von der Betriebswellenlänge des Wellenleiters unterscheidet, so dass die Erfassung der von dem Wellenleiter erzeugten Streustrahlung über Abstrahlelemente nicht unbedingt mit Verlusten bei der Betriebswellenlänge selbst einhergehen muss. Zum Beispiel lassen sich Wellenleiterabschnitte aus so genannten "Sub-Wavelength-Gratings", kurz "SWG" nutzen, die zu einer Abstrahlung der in dem Akzeptanzvolumen erzeugten optischen Strahlung führen, während sie optische Signale bei der Betriebswellenlänge der optischen Komponente nicht oder nicht maßgeblich beeinflussen. Ferner lassen sich Teilbereiche des Wellenleiters mit zusätzlichen Farbstoffen versehen, die durch die eingekoppelte optische Strahlung angeregt werden können, wobei aus dem Wellenleiter ausgekoppeltes emittiertes Licht ebenfalls von dem Objektiv erfasst werden kann.

In einer weiteren Ausführung kann die optische Komponente eine Gruppe von optischen Koppelstellen aufweisen, wobei es vorteilhaft sein kann, die in die gesamte Gruppe eingekoppelte optische Strahlung integral zu erfassen, insbesondere dann, wenn die den einzelnen optischen Koppelstellen zugeordneten Wechselwirkungsbereiche genügend große, einander nicht überlappende Raumbereiche aufweisen. Ein Beispiel hierfür ist eine Mehrkernfaser, an deren Ende ein gemeinsamer Fotodetektor angebracht ist, dessen aktive Fläche sich über alle Kerne der Mehrkernfaser erstreckt.

In einem weiteren Aspekt betrifft die vorliegende Erfindung eine Anordnung zur Lokalisierung einer optischen Koppelstelle, wobei die Anordnung umfasst:
- eine optische Komponente, welche mindestens eine optische Koppelstelle umfasst, wobei die optische Koppelstelle einen Wechselwirkungsbereich aufweist, der außerhalb eines von der optischen Komponente umfassten Volumens liegt;
- eine optische Einrichtung, die zur Erzeugung von optischer Strahlung in einem Erzeugungsbereich und/oder zur Erfassung zumindest eines Teils der erzeugten optischen Strahlung in einem Erfassungsbereich eingerichtet ist, wobei der Erzeugungsbereich und der Erfassungsbereich zumindest teilweise mit dem Wechselwirkungsbereich der optischen Koppelstelle überlappen; und
- eine Auswerteeinheit, welche zur Ermittlung einer ortsaufgelösten Verteilung eines erfassten Teils der optischen Strahlung und zur Bestimmung der Lokalisierung der optischen Koppelstelle aus der ermittelten ortsaufgelösten Verteilung des erfassten Teils der optischen Strahlung eingerichtet ist,
wobei die Anordnung derart eingerichtet ist, dass das Erfassen zumindest des Teils der erzeugten optischen Strahlung durch die optische Koppelstelle hindurch erfolgt.

Der Begriff der "optischen Einrichtung" bezeichnet eine Vorrichtung, welche zur Erzeugung und zur Erfassung von optischer Strahlung eingerichtet ist und zu diesem Zweck eingerichtete optische Komponenten umfasst, insbesondere eine zur Beaufschlagung des sich in dem Erzeugungsbereich befindlichen Mediums mit Licht eingerichtete Lichtquelle, die über die optische Koppelstelle oder über ein optisches System Licht in den Erzeugungsbereich einstrahlen kann, eine zur Erfassung zumindest eines Teils der erzeugten optischen Strahlung in einem Erfassungsbereich eingerichtete Messeinheit, insbesondere in Form eines Leistungsdetektors, die von der optischen Komponente oder dem optischen System umfasst sein kann oder die Bestandteile der optischen Komponente und Bestandteile des optischen Systems umfassen kann, und ein zur Übertragung und optional zur Modifikation von erzeugter und/oder erfasster optischer Strahlung eingerichtetes optisches System umfassen kann.

Bevorzugt kann die Lichtquelle hierbei als Pulslichtquelle ausgestaltet sein, welche zur Erzeugung von Lichtpulsen mit einer Pulsdauer von höchstens 10 ps, bevorzugt höchstens 1 ps, besonders bevorzugt höchstens 200 fs, insbesondere höchstens 100 fs, bei einer Wiederholrate von mindestens 1 MHz, bevorzugt von mindestens 10 MHz, besonders bevorzugt von mindestens 25 MHz, insbesondere von mindestens 100 MHz, verwendet werden. Hierfür eignen sich insbesondere Laserlichtquellen wie faserbasierte Femtosekundenlaser oder gepulste Festkörperlaser wie Titan: Saphir-Laser. Alternativ kann auch eine Dauerstrich-Lichtquelle eingesetzt werden.

Wie bereits erwähnt, ist die Lichtquelle vorzugsweise zur Einstrahlung des Lichts zumindest in einen Raumbereich eingerichtet, welcher ein Medium zur Erzeugung der optischen Strahlung durch Modifikation des eingestrahlten Lichts umfasst. Der Raumbereich, in dem durch eine durch das Medium verursachte Modifikation des eingestrahlten Lichtes die optische Strahlung erzeugt wird, wird im Folgenden auch als Erzeugungsbereich bezeichnet. Der Erzeugungsbereich überlappt zumindest teilweise mit dem Wechselwirkungsbereich der optischen Koppelstelle. Hierbei können die beiden Bereiche einen Überlappungsbereich aufweisen, der kleiner ist als jeder der beiden Bereiche; alternativ können die beiden Bereiche völlig identisch sein oder einer der Bereiche vom jeweils anderen vollständig umfasst sein. Für weitere Einzelheiten in Bezug auf das Medium und dessen vorteilhafte Ausgestaltungen wird auf die übrige Beschreibung verwiesen. Vorzugsweise kann hierbei ein Brechungsindex des Mediums an den Brechungsindex eines zum Einstrahlen des Lichts oder zum Erfassen der erzeugten optischen Strahlung eingerichteten Objektivs angepasst werden, insbesondere um eine Auflösung des Objektivs zu verbessern.

Wie bereits erwähnt, bezeichnet der Begriff des "optischen Systems" eine von der optischen Einheit umfasste Vorrichtung, welche zum Transfer und optional zur Modifikation von erzeugter und/oder erfasster optischer Strahlung eingerichtet ist und zu diesem Zweck mindestens ein optisches Element, vorzugsweise mindestens eine optische Linse umfasst, wobei entweder die Erzeugung oder die Erfassung optischer Strahlung ortsaufgelöst möglich ist. Für einen gegebene Vakuum-Betriebswellenlänge λ der optischen Komponente liegt die Ortsauflösung eines Erzeugungsvorgangs oder eines Erfassungsvorgangs bevorzugt von 0,01 λ bis 100 λ, besonders bevorzugt von 0,05 λ bis 10 λ, insbesondere von 0,1 λ bis 10 λ. In einer besonders bevorzugten Ausgestaltung umfasst das optische System, das zur Erzeugung oder Erfassung der optischen Strahlung in dem Raumbereich eingerichtet ist, mindestens ein Objektiv. Zur Erzielung einer hohen Ortsauflösung eignen sich vorzugsweise Lithographie-Objektive mit hoher numerischer Apertur (NA). Hierbei bezeichnet der Begriff "hohe numerische Apertur" bevorzugt eine numerische Apertur des Objektivs über 0,3, besonders bevorzugt über 0,6, insbesondere über 0,8 oder sogar über 1,0. Insbesondere bei der Anwendung des unten näher beschriebenen Verfahrens zur Erzeugung einer Mikrostruktur an der optischen Koppelstelle, bevorzugt mittels dreidimensionaldirektschreibender Laserlithographie, lässt sich zur Erfassung oder Erzeugung der optischen Strahlung dasselbe Objektiv verwenden, das auch zur Erzeugung der Mikrostruktur verwendet wird. Dies hat neben einer verringerten Zahl an Komponenten den Vorteil, dass etwaige Abbildungsfehler des Objektivs, wie z.B. eine Bildfeldverzerrung, nicht ins Gewicht fallen oder zumindest teilweise kompensiert werden. In einer besonderen Ausgestaltung kann das Objektiv hierbei in direktem Kontakt mit einem als Immersionsmedium dienenden Fotolack stehen. Dieser Fotolack kann auch gleichzeitig als Medium zur Modifikation des eingestrahlten Lichtes und zur damit verbundenen Erzeugung der optischen Strahlung dienen. Dem Fotolack können dabei in einer bevorzugten Ausführungsform Substanzen beigemischt werden, die mit Hilfe des eingestrahlten Lichtes die Erzeugung der optischen Strahlung durch Lichtstreuung, Phosphoreszenz, Fluoreszenz, Lumineszenz oder verwandte Prozesse erlauben.

Zur Ermittlung der ortsaufgelösten Verteilung eines Teils der erfassten optischen Strahlung kann vorzugsweise eine Position eines Raumelements, in dem optische Strahlung durch Modifikation des eingestrahlten Lichtes erzeugt oder erzeugte Strahlung erfasst wird, durch den Erzeugungsbereich oder den Erfassungsbereich bewegt und dabei eine Abhängigkeit der Leistung der erfassten Strahlung von der Position des Raumelements bestimmt werden. Hierzu kann bevorzugt ein Strahlscanner verwendet werden, der über den Erzeugungsbereich oder den Erfassungsbereich eine schnelle Ablenkung des eingestrahlten Strahl oder des erfassten Strahls insbesondere senkrecht zur Strahlrichtung erlaubt. Der Strahlscanner kann vorzugsweise ausgewählt sein aus einem sogenannten "Galvo-Scanner" und einem auf mikro-elektromechanischen Systemen (MEMS) beruhenden Spiegelscanner. Die Bewegung des eingestrahlten oder erfassten Strahls entlang der Strahlrichtung lässt sich mit Hilfe einer Bewegung des Objektivs und/oder der optischen Komponente erreichen. Alternativ können auch andere Anordnungen zur Anwendung kommen, insbesondere 3D-Scanner auf Basis räumlicher Lichtmodulatoren oder deformierbarer Spiegel. Weitere Ausgestaltungen, insbesondere auf Basis von Verfahren aus der Konfokalmikroskopie oder der Laserrastermikroskopie (engl. *laser scanning microscopy,* LSM) sind denkbar. Hierbei kann der Strahlscanner auch zur lithographischen Erzeugung von Mikrostrukturen verwendet werden.

In einer besonders bevorzugten Ausgestaltung kann die Messeinheit zur Ermittlung der ortsaufgelösten Verteilung der innerhalb des Erfassungsbereichs erfassten optischen Strahlung einen Leistungsdetektor umfassen, wobei der Leistungsdetektor zur Bestimmung einer optischen Leistung der optischen Strahlung eingerichtet ist. Wie oben bereits ausgeführt, kann der Leistungsdetektor insbesondere in Form eines optischen Leistungs-messkopfes vorgesehen sein. Zur Selektion der erfassten optischen Strahlung können bevorzugt optische Filter und/oder Strahlteiler verwendet werden. Insbesondere kann hierbei das optische Filter ein spektrales Filter umfassen, welches zur Trennung der Streustrahlung und der Lumineszenz-Strahlung eingerichtet sein kann. Die verwendeten Filter können auch zur Erfassung ausgewählter Wellenlängen oder Polarisationszustände dienen. Zur Bestimmung der Leistung der optischen Strahlung sind insbesondere rauscharme Leistungsdetektoren mit hoher Empfindlichkeit zur Detektion kleiner optischer Leistungen, insbesondere p-i-n-Dioden mit rauscharmen elektronischen Verstärkern oder Fotomultiplier, vorteilhaft. Alternativ oder zusätzlich kann der Leistungsdetektor einen Teil der optischen Komponente bilden, zum Beispiel bei integrierten Fotodioden. Die Messeinheit kann als integraler Bestandteil der optischen Komponente oder des optischen Systems ausgestaltet sein oder Bestandteile der optischen Komponente oder Bestandteile des optischen Systems umfassen. Insbesondere kann zur Detektion der optischen Strahlung eine als Bestandteil des optischen Systems ausgeführt Fotodiode eingesetzt werden, während die Erfassung, Verstärkung und Auswertung des dabei erzeugten elektrischen Signals durch entsprechend eingerichtete Funktionseinheiten des optischen Systems erfolgen kann. In einer weiteren, ebenfalls bevorzugten Ausführungsform kann die eingekoppelte optische Strahlung durch das zur Anregung verwendete Objektiv selbst erfasst werden, wobei, wie oben beschrieben, Auskoppelstellen auf der optischen Komponente selbst eingesetzt werden können. Alternativ können zusätzliche Objektive zum Erfassen der optischen Strahlung verwendet werden. Zum Nachweis der Strahlung kann in allen Ausführungsformen ein Lock-in Messprinzip eingesetzt werden, um Hintergrundstrahlung, z.B. eine externe Beleuchtung, von der im Erzeugungsbereich erzeugten optischen Strahlung unterscheiden zu können.

Bei der Auswerteeinheit, die zur Bestimmung der Lokalisierung der optischen Koppelstelle aus der erfassten ortsaufgelösten Verteilung der optischen Strahlung eingerichtet ist, kann es sich vorzugsweise um eine elektronisch steuerbare Einrichtung handeln, welche insbesondere über einen Computer, einen Mikrocomputer oder einen programmierbaren Chip, z.B. eine anwendungsspezifische integrierte Schaltung (engl. application-specific integrated circuit; ASIC) oder ein FPGA (engl. field-programmable gate Array), verfügen kann, wobei die Einrichtung auf ein Computerprogramm, das zur Durchführung zumindest eines der vorliegenden Verfahren eingerichtet ist, zugreifen kann. Zur genauen Lokalisierung des Wechselwirkungsbereichs der optischen Koppelstelle kann die Auswerteeinheit dazu eingerichtet sein, eine Entfaltung der durch das Objektiv vorgegebenen räumlichen Verteilung der Anregung oder der Erfassung der optischen Strahlung vorzunehmen. Dies kann insbesondere dann vorteilhaft sein, wenn die räumliche Verteilung der Anregung oder der Erfassung in zumindest einer Raumrichtung dieselben oder größere Abmessungen aufweist als der Querschnitt des Erzeugungsbereichs oder des Erfassungsbereichs an der betreffenden Stelle.

Für weitere Einzelheiten in Bezug auf die Anordnung zur Lokalisierung der optischen Koppelstelle, insbesondere im Hinblick auf die optische Komponente und die zugehörige mindestens eine optische Koppelstelle, wird auf die übrige Beschreibung in diesem Dokument verwiesen.

In einem weiteren Aspekt betrifft die vorliegende Erfindung ein Verfahren zur Erzeugung einer Mikrostruktur an einer optischen Koppelstelle. Dieses Verfahren umfasst hierbei die folgenden Schritte, die vorzugsweise in der angegebenen Reihenfolge, beginnend mit Schritt i), auf den Schritt ii) folgt, durchgeführt wird, wobei zusätzliche Schritte ebenfalls denkbar sind:
i) Lokalisierung der optischen Koppelstelle gemäß dem hierin beschriebenen Verfahren zur Lokalisierung der optischen Koppelstelle; und
ii) Erzeugen einer Mikrostruktur an der optischen Koppelstelle mittels eines Fertigungsverfahrens, ausgewählt aus einem additiven Fertigungsverfahren oder einem subtraktiven Fertigungsverfahren.

Nach der Lokalisierung der optischen Koppelstelle kann die hierdurch bestimmte Informationen über die Position und die Orientierung der optischen Koppelstelle zur Erzeugung einer Mikrostruktur an der optischen Koppelstelle verwendet werden, insbesondere indem die Position und die Orientierung der Mikrostruktur aus der Informationen über die Lokalisierung der optischen Koppelstelle abgeleitet werden. In einer bevorzugten Ausführungsform kann die Mikrostruktur ein direkt an die optische Koppelstelle anschließendes optisches Element sein, bevorzugt ein optischer Wellenleiter oder ein anderes mikro-optisches Element. Alternativ kann die Mikrostruktur oder ein Bestandteil hiervon von der optischen Koppelstelle beabstandet sein. Eine bevorzugte Ausgestaltung kann die Fertigung einer Mikrolinse, eines Mikrospiegels oder einer beliebigen Kombination von Mikrolinsen, Mikrospiegeln und andere mikro-optischen Komponenten, insbesondere optischen Wellenleitern, umfassen. Die Mikrostruktur oder ein Bestandteil hiervon lässt sich sehr präzise an der betreffenden Koppelstelle ausrichten und insbesondere in Form, Position und Orientierung derart ausgestalten, dass eine effiziente Kopplung von Licht, das in einer bestimmten Amplituden- und Phasenverteilung vorliegt, durch die Mikrostruktur hindurch in die optische Koppelstelle erreicht wird. Umgekehrt kann aus der Koppelstelle ausgekoppeltes Licht durch die Mikrostruktur oder ein Bestandteil hiervon in eine vorgegebene Amplituden- und Phasenverteilung überführt werden. Derartige Ausgestaltungen lassen sich insbesondere zur optischen Verbindung zweier optischer Komponenten verwenden, wobei die von einer ersten optischen Komponente abgestrahlte Amplitudenverteilung und/oder Phasenverteilung derart modifiziert werden kann, dass eine effiziente Einkopplung in eine andere optische Komponente erreicht werden kann.

Der Begriff des "additiven Fertigungsverfahrens" bezeichnet hierbei ein HerstellungsVerfahren, bei welchem Material an oder auf eine Ausgangsstruktur an- oder aufgebracht wird, während der Begriff des "subtraktiven Fertigungsverfahrens" ein alternatives Herstellungsverfahren bezeichnet, bei welchem Material von der Ausgangsstruktur entfernt wird. Der Materialauftrag oder Materialabtrag lässt sich in einer bevorzugten Ausführungsform mit lithographischen Verfahren unter Verwendung geeigneter Fotolacke, insbesondere Negativ- oder Positivlacke, erreichen. Zur lithographischen Erzeugung der Mikrostruktur an der optischen Koppelstelle kann somit auch das oben beschriebene optische System zur Erzeugung oder Erfassung der optischen Strahlung in dem Wechselwirkungsbereich bzw. Teile desselben verwendet werden. Wie dort erwähnt, kann das optische System vorzugsweise ein Objektiv mit hoher numerischer Apertur umfassen, das eine hohe optische Auflösung aufweist. In einer besonders bevorzugten Ausführungsform ist das Objektiv auch dazu eingerichtet, dreidimensionale Mikrostrukturen mittels eines dreidimensional direktschreibenden Lithographie-Verfahrens zu erzeugen. Hierbei bezeichnet der Begriff des "dreidimensional direktschreibenden Lithographie-Verfahrens" ein Mikrostrukturierungsverfahren, mit dem es möglich ist, ein oder mehrere Materialien in Form eines dreidimensionalen Musters oder Layouts in additiver oder subtraktiver Weise zu strukturieren oder abzulagern. Damit lassen sich dreidimensionale Strukturen mit einer Genauigkeit von bevorzugt besser als 1000 nm, besonders bevorzugt besser als 500 nm, und ganz besonders bevorzugt besser als 300 nm erzeugen, wobei der Begriff "dreidimensional" eine mögliche Formgebung der Strukturen in ein, zwei oder drei Raumrichtungen bezeichnet. Die Auflösung des dreidimensional direktschreibenden Lithographie-Verfahrens kann hierbei bevorzugt besser als 10 µm, besonders bevorzugt besser als 5 µm, und ganz besonders bevorzugt besser als 2 µm oder besser als 1 µm oder 500 nm, sein, wobei sich der Begriff "Auflösung" auf die größte Ausdehnung des kleinsten mit dem Verfahren herstellbaren Strukturelements bezieht. Das dreidimensionaldirektschreibende Lithographie-Verfahren kann bevorzugt so ausgelegt sein, dass es unter normalen atmosphärischen Umgebungsbedingungen durchgeführt werden kann und kein Vakuum benötigt wird. Insbesondere eignen sich additive oder subtraktive dreidimensional direktschreibende Lithographie-Verfahren, die es erlauben, Materialien mit einer Rate von bevorzugt mehr als 50 µm³/s, mehr bevorzugt von mehr als 500 µm³/s, besonders bevorzugt von mehr als 1000 µm³/s, und ganz besonders bevorzugt von mehr als 10 000 µm³/s abzulagern bzw. zu entfernen. In einer besonders bevorzugten Ausgestaltung kann das dreidimensional direktschreibende Lithographie-Verfahren auf dem Prinzip der Mehrphotonen-Lithographie beruhen. In einer besonderen Ausgestaltung kann das Medium, in dem die zu erfassende optische Strahlung erzeugt wird, hierbei in Form eines Immersionsmediums bereitgestellt werden, das in direktem Kontakt mi der zu lokalisierenden Koppelstelle steht, wobei das Objektiv mit dem Immersionsmedium selbst in Kontakt stehen kann oder nicht. Hierbei kann das Immersionsmedium selbst als Fotolack zur Herstellung der gewünschten Mikrostrukturen verwendet werden oder durch eine lichtdurchlässige Membran von dem Fotolack getrennt sein. In einer bevorzugten Ausführungsform können in das Medium Substanzen eingebracht werden, die mittels des eingestrahlten Lichtes die Erzeugung der optischen Strahlung insbesondere durch Lichtstreuung, Phosphoreszenz, Fluoreszenz oder Lumineszenz erlauben. Im Falle eines Fotolacks ist es insbesondere möglich, Fluoreszenzeigenschaften einer beigefügten Komponente des Fotolacks, insbesondere eines Fotoinitiators, zu nutzen oder zusätzlich Fluoreszenzfarbstoffe beizufügen. Die Anregung der Lumineszenz oder der Fluoreszenz kann hierbei auf Einphotonenprozessen oder auf Mehrphotonenprozessen beruhen.

Für weitere Einzelheiten in Bezug auf das Verfahren zur Erzeugung einer Mikrostruktur an einer optischen Koppelstelle wird auf die Beschreibung der erfindungsgemäßen Verfahren und Anordnung zur Lokalisierung einer optischen Koppelstelle verwiesen.

### Vorteile der Erfindung

Die vorliegende Erfindung weist eine Reihe von Vorteilen gegenüber den aus dem Stand der Technik bekannten Verfahren und optischen Systemen auf. Die vorliegenden Verfahren und Anordnung zur Lokalisierung der optischen Koppelstelle und zur optionalen Erzeugung einer Mikrostruktur ermöglichen insbesondere eine präzise Lokalisierung der mindestens einen optischen Koppelstelle, wobei eine relative Positionierungstoleranz besser als 1 µm, besonders bevorzugt besser als 200 nm, insbesondere besser als 50 nm, erreichbar ist. Der Begriff der "Positionierungstoleranz" bezieht sich auf die Summe aller statistischen und systematischen Abweichungen von einer messtechnisch ermittelten Position der optischen Koppelstelle im Vergleich zu ihrer tatsächlichen Position.

Das vorliegende Verfahren kann es insbesondere mittels eines Wechselwirkungsprozesses, durch welchen die Ausbreitungsrichtung des von der zu lokalisierenden optischen Koppelstelle oder dem Lithographie-Objektiv in den Erzeugungsbereich eingestrahlten Lichts derart modifiziert werden kann, ermöglichen, dass zumindest ein Teil des in den Erzeugungsbereich eingestrahlten Lichts durch das Objektiv oder durch die zu lokalisierenden Koppelstelle erfasst werden kann. Eine effektive Modifikation der Ausbreitungsrichtung kann hierbei bevorzugt mittels Streuzentren oder durch Lumineszenz-Farbstoffe erfolgen. Eine besonders bevorzugte Ausgestaltung umfasst eine Nutzung von Mehrphotonen-Fluoreszenz, bevorzugt eines Fotoinitiators, durch das Lithographie-System. Da hierbei jeweils nur im Fokus des Lithographie-Systems die Lumineszenz angeregt wird, ist eine ortsaufgelöste Erfassung des Wechselwirkungsbereichs mit hoher Auflösung in drei Raumrichtungen möglich.

### Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Im Einzelnen zeigen:
- Figur 1: Figur 1A schematische Darstellung von einem nicht erfindungsgemäßen Beispiel eines Verfahrens zur Lokalisierung einer optischen Koppelstelle;
- Figur 1B: schematische Darstellung von einem erfindungsgemäßen Beispiel eines Verfahrens zur Lokalisierung einer optischen Koppelstelle.
- Figur 2: eine schematische Darstellung von Position, Orientierung und zugehörigem Wechselwirkungsbereich der optischen Koppelstelle;
- Figur 3: eine schematische Darstellung eines weiteren Ausführungsbeispiels, wobei die Erfassung der Lokalisierung einer optischen Koppelstelle durch Anregung oder Erfassung einer Lumineszenz-Strahlung erfolgt;
- Figur 4: eine schematische Darstellung eines weiteren Ausführungsbeispiels, wobei die Erfassung der Lokalisierung einer optischen Koppelstelle durch Anregung oder Erfassung von Streustrahlung erfolgt;
- Figur 5: eine schematische Darstellung eines weiteren Ausführungsbeispiels, wobei die optische Koppelstelle um eine Distanz von einer Oberfläche der optischen Komponente versetzt angeordnet ist;
- Figur 6: eine schematische Darstellung eines weiteren Ausführungsbeispiels, wobei die Erfassung der Lokalisierung einer optischen Koppelstelle durch Anregung von Lumineszenzstrahlung oder Streustrahlung in einem Kern eines Wellenleiters erfolgt;
- Figur 7: ein Ausführungsbeispiel einer an der Position der optischen Koppelstelle erzeugten Mikrostruktur in Form eines dielektrischen Freiformwellenleiters;
- Figur 8: ein Ausführungsbeispiel einer an der Position der optischen Koppelstelle erzeugten Mikrostruktur in Form einer Mikrolinse;
- Figur 9: ein weiteres Ausführungsbeispiel, umfassend eine Mehrzahl an optischen Koppelstellen;
- Figur 10: bevorzugte Ausführungen zur Erfassung der in die optische Koppelstelle eingebrachten optischen Strahlung oder zur Einkopplung des Lichts zur Anregung der optischen Strahlung im Wechselwirkungsbereich der optischen Koppelstelle;
- Figur 11: beispielhaft einen Wechselwirkungsbereich der Koppelstelle einer oberflächenbeleuchteten Fotodiode; und
- Figur 12: ein bevorzugtes Ausführungsbeispiel einer erfindungsgemäßen Anordnung zur Lokalisierung einer optischen Koppelstelle.

### Beschreibung der Ausführungsbeispiele

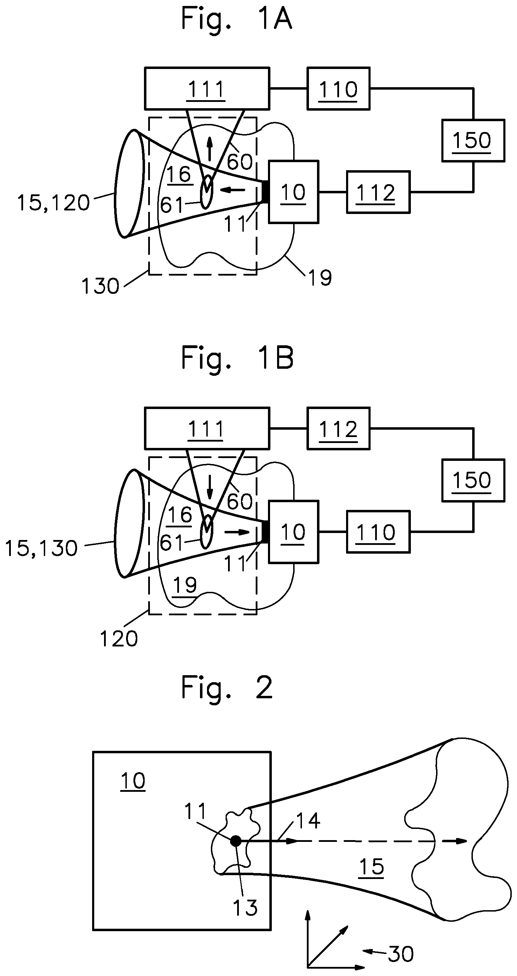

Die Figuren 1A und 1B zeigen jeweils eine schematische Darstellung von Verfahren zur Lokalisierung einer optischen Koppelstelle 11, welche von einer optischen Komponente 10 umfasst wird. Die Koppelstelle 11 weist einen zugehörigen Wechselwirkungsbereich 15 auf. Die optische Komponente 10 ist vorzugsweise ausgewählt aus der Gruppe umfassend: lichtleitende Einmoden- oder Mehrmodenfasern aus organischen oder anorganischen Materialien, halbleiterbasierte integriert-optische Chips, insbesondere Laser, optische Verstärker, Fotodioden, Superlumineszenz-Dioden oder Siliziumphotonik-Chips, integriert-optische Chips auf Basis von Halbleitern oder dielektrischen Materialien, bevorzugt Gläsern, Siliziumdioxid, Siliziumnitrid oder Polymeren; optische Leiterplatten, oder optische Elemente für die Freistrahl-Optik, insbesondere Linsen, Strahlteiler, Isolatoren, Dünnschichtfilter, Spiegel, oder Beugungsgitter. Die optischen Komponenten können optische Wellenleiter mit geringem Indexkontrast, z.B. glasbasierte optische Wellenleiter, oder Wellenleiter mit mittlerem oder hohem Indexkontrast, z.B. halbleiterbasierte Wellenleiter, aufweisen. Weitere Arten von optischen Komponenten 10 sind denkbar, insbesondere Filter, Leistungsteiler oder elektrooptische Modulatoren.

Gemäß dem vorliegenden Verfahren wird insbesondere zumindest in einem Erzeugungsbereich 120 eine optische Strahlung erzeugt, wobei der Erzeugungsbereich 120 zumindest bereichsweise mit dem Wechselwirkungsbereich 15 überlappt. Die erzeugte optische Strahlung wird in einem Erfassungsbereich 130 erfasst, wobei der Erfassungsbereich 130 ebenfalls zumindest bereichsweise mit dem Wechselwirkungsbereich 15 überlappt. Die an einem ausgewählten Punkt 16 in einem Überlappungsbereich zwischen dem Wechselwirkungsbereich 15 und Erzeugungsbereich 120 erzeugte optische Strahlung steht somit in Wechselwirkung mit der optischen Koppelstelle 11, da
(1) entweder aus der optischen Koppelstelle 11 emittiertes Licht den ausgewählten Punkt 16 erreichen kann oder
(2) optische Strahlung, die von einer an dem ausgewählten Punkt 16 platzierten isotrop strahlenden Punktlichtquelle emittiert würde, in die optische Koppelstelle 11 einkoppelbar ist.

Im ersten Fall (1) liegt der ausgewählte Punkt des Raumbereichs 15 innerhalb eines so genannten "Emissionsbereichs" der optischen Koppelstelle 11; im zweiten Fall innerhalb eine so genannten "Akzeptanzbereichs" der optischen Koppelstelle 11.

In der Ausführung gemäß den Figuren 1A und 1B wird hierzu jeweils ein Medium 19 eingesetzt, das einen Überlappungsbereich des Erzeugungsbereichs 120 und des Erfassungsbereichs 130 zumindest teilweise ausfüllt. Das Medium 19 kann hierbei besonders bevorzugt eine Substanz umfassen, die zur Erzeugung der optischen Strahlung aus dem in den Erzeugungsbereich 120 eingestrahlten Licht eingerichtet ist. Das in den Erzeugungsbereich 120 eingestrahlte Licht dient vorzugsweise dazu, mittels des Mediums 19 innerhalb eines Teilbereichs des Erfassungsbereichs 130 die gewünschte optische Strahlung, die insbesondere eine Streustrahlung oder eine Lumineszenz-Strahlung sein kann, zu erzeugen. Wie schematisch dargestellt, kann hierbei das Medium 19 vorzugsweise einen Überschneidungsbereich des Erzeugungsbereiches 120, des Erfassungsbereiches 130 und des Wechselwirkungsbereiches 15 der zu lokalisierenden optischen Koppelstelle 11 ganz oder teilweise ausfüllen.

In der Ausführung gemäß Figur 1A wird das Licht zur Erzeugung der optischen Strahlung von einer Lichtquelle 112 bereitgestellt und mittels der optischen Komponente 10 durch die optische Koppelstelle 11 hindurch in den Wechselwirkungsbereich 15 der Koppelstelle emittiert. In diesem Fall sind der Wechselwirkungsbereich 15 der optischen Koppelstelle 11 und der Erzeugungsbereich 120 zumindest in der Nähe der Koppelstelle vorzugsweise deckungsgleich. In größeren Entfernungen von der optische Koppelstelle 11 kann der Fall auftreten, dass in einem zum Wechselwirkungsbereich 15 gehörenden Punkt keine optische Strahlung durch das von der optischen Koppelstelle 11 emittierte Licht erzeugt werden kann, da die Absorption oder Streuung des Lichts zwischen der optischen Koppelstelle 11 und dem betreffenden Punkt zu stark ist. Bei der Lichtquelle 112 kann es sich vorzugsweise um eine Pulslichtquelle handeln, welche zur Erzeugung von Lichtpulsen eingerichtet ist. Alternativ kann auch eine Dauerstrich-Lichtquelle eingesetzt werden. Das Ermitteln einer ortsaufgelösten Verteilung der erfassten optischen Strahlung im Erfassungsbereich 130 in der in Fig. 1A gezeigten Ausführung erfolgt mittels des optischen Systems 111. Hierzu kann bevorzugt ein Objektiv, bevorzugt ein Lithographie-Objektiv, verwendet werden, das die Erfassung jeweils in einem Fokuskegel 60 oder nur in einem Fokuspunkt 61 oder in einem endlichen, den Fokuspunkt 61 umgebenden Volumenelement innerhalb des Erfassungsbereichs 130 vornimmt. Die Position des Fokuskegels 60, des Fokuspunkts 61 oder des zugehörigen Volumenelements lässt sich bevorzugt mittels eines von dem optischen System 111 umfassten Strahlscanners während des Erfassungsvorgangs, beispielsweise in Form eines ein-, zwei-, oder dreidimensionalen Scanvorgangs, variieren. Die mittels des optischen Systems 111 erfasste optische Strahlung wird zur Auswertung an eine Messeinheit 110 geführt, welche insbesondere in Form eines Leistungsdetektors ausgeführt sein kann. Zusätzlich oder alternativ kann die Messeinheit 110 einen Kamerasensor oder ein eindimensionales oder mehrdimensionales Detektorarray umfassen.

In der Ausführung gemäß Figur 1A und 1B erfolgt die gewünschte Lokalisierung der optischen Koppelstelle 11 aus der mittels der Messeinheit 110 ermittelten ortsaufgelösten Verteilung der erfassten optischen Strahlung innerhalb des Erfassungsbereichs 130. Hierzu wird eine Auswerteeinheit 150 verwendet, welche zur Bestimmung der Lokalisierung der optischen Koppelstelle 11 aus der erfassten ortsaufgelösten Verteilung der optischen Strahlung eingerichtet ist.

In der erfindungsgemäßen Ausführung gemäß Figur 1B wird das von der Lichtquelle 112 bereitgestellte Licht zur Erzeugung der optischen Strahlung mittels des optischen Systems 111 in den Erzeugungsbereich 120 emittiert. Hierzu kann bevorzugt ein Objektiv, besonders bevorzugt ein Lithographie-Objektiv, verwendet werden, das die Erzeugung der optischen Strahlung jeweils in dem Fokuskegel 60 oder nur im in einem Fokuspunkt 61 oder einem den Fokuspunkt 61 umgebenden Volumenelement innerhalb des Erzeugungsbereichs 120 vornimmt. Das Erfassen der ortsaufgelösten Verteilung der optischen Strahlung im Erfassungsbereich 130 erfolgt in dieser Ausführung durch die optische Koppelstelle 11 hindurch, welche die im Erzeugungsbereich 120 erzeugte optische Strahlung erfasst, soweit diese in die optische Koppelstelle 11 eingekoppelt werden kann, mittels der Messeinheit 110, die insbesondere in Form eines Leistungsdetektors ausgeführt sein kann, und die zusätzlich oder alternativ einen Kamerasensor oder ein Detektorarray umfassen kann. In diesem Fall sind der Wechselwirkungsbereich 15 der optischen Koppelstelle und der Erfassungsbereich 130 zumindest in der Nähe der Koppelstelle vorzugsweise deckungsgleich. In größeren Entfernungen von der Koppelstelle kann der Fall auftreten, dass die optische Strahlung, die in einem zum Wechselwirkungsbereich 15 gehörenden Punkt erzeugt wird, die optische Koppelstelle 11 nicht oder nur mit großen Verlusten erreicht, da die Absorption oder die Streuung der optischen Strahlung zwischen dem betreffenden Punkt und der optischen Koppelstelle 11 zu stark ist.

Das Ermitteln einer ortsaufgelösten Verteilung der erfassten optischen Strahlung in dem Erfassungsbereich 130 erfolgt bei in Fig. 1B gezeigten Ausführung dadurch, dass die Position des Fokuskegels 60, des Fokuspunktes 61 oder des zugehörigen Volumenelements vorzugsweise mittels eines von dem optischen System 111 umfassten Strahlscanners während des Erfassungsvorganges, beispielsweise in Form eines ein-, zwei-, oder dreidimensionalen Scanvorganges, innerhalb des Erzeugungsbereichs 120 variiert und dabei fortwährend die mittels der Messeinheit 110 erfasste optische Strahlung ermittelt wird. Die Speicherung und Auswertung der Daten und die Ermittlung der Position und Orientierung der optischen Koppelstelle 11 erfolgt mit Hilfe der Auswerteeinheit 150, welche zur Bestimmung der Lokalisierung der optischen Koppelstelle 11 aus der erfassten ortsaufgelösten Verteilung der optischen Strahlung eingerichtet ist.

Unabhängig von der Art der Ausführung gemäß Figur 1A oder 1B erfolgt die Führung der optischen Strahlung oder des die optische Strahlung erzeugenden Lichts in einer Weise, dass die optische Strahlung oder das die optische Strahlung erzeugende Licht die optische Koppelstelle 11 tatsächlich durchquert. Nur so kann sichergestellt werden, dass die ortsaufgelöste Verteilung der erfassten optischen Strahlung tatsächlich die Lokalisierung der optischen Koppelstelle 11 angibt, indem die erfasste optische Strahlung in Bezug zu der zu lokalisierenden optischen Koppelstelle 11 steht.

Die Lokalisierung der optischen Koppelstelle 11 kann eine Angabe von Position 13 und Orientierung 14 der optischen Koppelstelle 11 umfassen, die in Figur 2 zusammen mit dem zugehörigen Wechselwirkungsbereich 15 der optischen Koppelstelle 11 schematisch dargestellt sind. Hierbei können die Angaben zur räumlichen Position 13 der optischen Koppelstelle 11 einen Positionsvektor in einem dreidimensionalen Koordinatensystem 30 umfassen, während die Angaben zur Orientierung 14 der optischen Koppelstelle 11 einen oder mehrere dreidimensionalen Orientierungsvektor umfassen können, wobei einer der Orientierungsvektor beispielsweise eine Richtung angibt, in welcher das Licht aus der optischen Koppelstelle 11 abgestrahlt werden kann oder aus welcher eine effiziente Einkopplung des Lichts in die optische Koppelstelle 11 möglich ist. Besonders bevorzugt werden sowohl der Positionsvektor als auch der Orientierungsvektor in demselben Koordinatensystem 30 angegeben. Im Falle mehrere Orientierungsvektoren kann einer der Orientierungsvektoren eine rotatorische Ausrichtung der Koppelstelle in Bezug auf eine optische Achse definieren, die beispielsweise durch die Polarisation des von der Koppelstelle emittierten oder des von ihr erfassten Lichts bestimmt wird.

Das Bestimmen der Position 13 und der Orientierung 14 der optischen Koppelstelle 11 erfolgt mittels der Auswerteeinheit 150 vorzugsweise durch mindestens eine der folgenden Maßnahmen. Eine erste Maßnahme kann einen Nachweis eines Auftretens oder Verschwindens, insbesondere eines abrupten Auftretens oder Verschwindens, der erfassten optischen Strahlung an einem Ort innerhalb des Erfassungsbereichs 130 umfassen. Eine weitere Maßnahme kann das Erfassen des Verlaufes, beispielsweise des Anstiegs oder Abfalls der erfassten ortsaufgelösten Verteilung der optischen Strahlung in dem Erfassungsbereich umfassen. Eine weitere Maßnahme kann eine Anwendung eines Modells für die optische Koppelstelle 11, für die positionsabhängige Einkopplung der optischen Strahlung in dem Erzeugungsbereich 120 in die optische Koppelstelle 11 oder für die Verteilung des zur Erzeugung der optischen Strahlung aus der optischen Koppelstelle 11 abgestrahlten Lichtes umfassen. Weitere Maßnahmen sind jedoch denkbar. In sehr einfachen Fällen können derartige Modelle beispielsweise auf der Theorie von sog. Gauß-Strahlen beruhen, die eine paraxiale Näherung der Strahlausbreitung annimmt. Andere Modelle können sich Verfahren der Fourier-Optik oder der numerischen Beschreibung optischer Feldausbreitung bedienen.

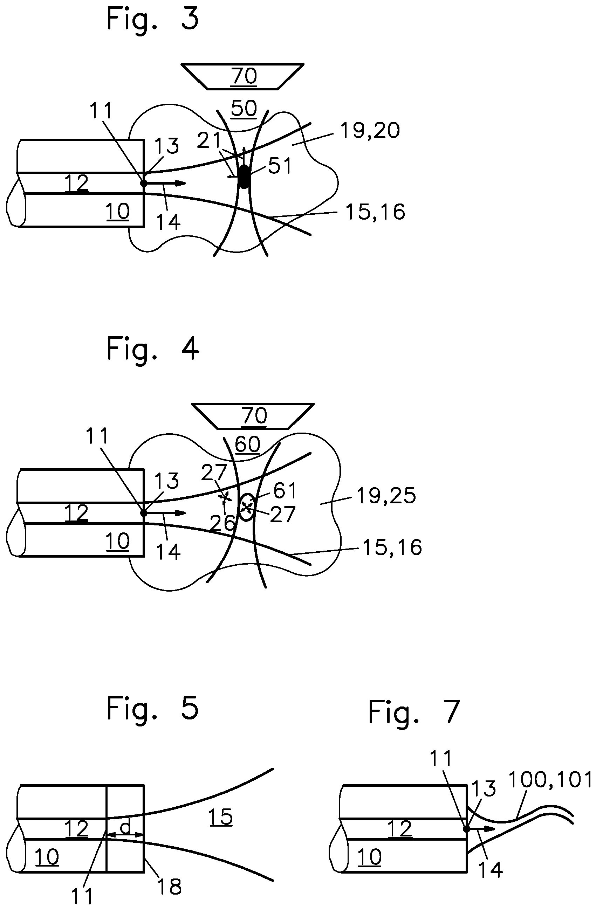

Figur 3 zeigt schematisch ein Verfahren, in welchem die Erfassung der räumlichen Position 13 und der Orientierung 14 der von der optischen Komponente umfassten Koppelstelle 11 durch Anregung oder Erfassung von Lumineszenz-Strahlung 21 in einem Volumenelement erfolgt, das einen Fokuspunkt 51 eines von einem Objektiv 70 ausgesandten oder empfangenen Strahls 50 umgibt. Durch räumliche Verschiebung des Volumenelements um den Fokuspunkt 51, insbesondere mittels eines Strahlscanners, lässt sich innerhalb des zumindest teilweise vom Medium 19 ausgefüllten Erfassungsbereichs 120 die ortsaufgelöste Verteilung der erfassten optischen Strahlung ermitteln. Das Objektiv 70 kann in einer bevorzugten Ausführungsform auch zur lithographischen Herstellung von Mikrostrukturen verwendet werden. In einer bevorzugten Ausführungsform kann der Erfassungsbereich 120 mit zumindest teilweise mit einer zur Erzeugung von Lumineszenz eingerichtete Substanz 20 ausgefüllt sein, die die Rolle des Mediums 19 übernimmt. Dabei kann es sich beispielsweise um einen Photoresist handeln, der bereits bei Bestrahlung unterhalb der Polymerisationsschwelle eine Mehrphotonen-fluoreszenz aufweist. Im einfachen Fall eines optischen Wellenleiters 12 mit einer senkrecht zur Wellenleiterachse stehenden Facette entspricht die Orientierung 14 der optischen Koppelstelle 11 einer optischen Achse eines sich an die optische Koppelstelle 11 anschließenden Abschnitts des optischen Wellenleiters 12. Die Anregung der LumineszenzStrahlung 21 kann hierbei entweder durch die optische Koppelstelle 11 hindurch oder durch das Lithographie-Objektivs 70 hindurch erfolgen.

Figur 4 zeigt schematisch ein weiteres Ausführungsbeispiel des vorliegenden Verfahrens, in welchem die Erfassung der räumlichen Position 13 und der Orientierung 14 der von der optischen Komponente umfassten Koppelstelle 11 durch die Anregung oder die Erfassung von Streustrahlung 26 in einem Volumenelement erfolgt, das den Fokuspunkt 61 eines von einem Objektiv 70 ausgesandten oder empfangenen Strahls 60 umgibt. In Bezug auf eine örtliche Verschiebung des Volumenelements, insbesondere im Rahmen eines ein- oder mehrdimensionalen Scanvorganges, gilt das in der Beschreibung zu Figur 3 Gesagte. Auch hier kann das Objektiv 70 in einer bevorzugten Ausführungsform auch zur lithographischen Herstellung von Mikrostrukturen verwendet werden. Die Streustrahlung 26 kann vorzugsweise mittels Streuzentren 27 erzeugt werden, welche das in das Volumenelement 61 eingestrahlte Licht derart streuen, dass die dadurch erzeugte Streustrahlung zumindest teilweise erfasst werden kann. Im einfachen Fall eines optischen Wellenleiters 12 entspricht die Orientierung 14 der optischen Koppelstelle 11 einer optischen Achse eines sich an die optische Koppelstelle 11 anschließenden Abschnitts des optischen Wellenleiters 12. Die Anregung der Streustrahlung 21 kann hierbei entweder durch die optische Koppelstelle 11 hindurch oder mittels des Lithographie-Objektivs 70 erfolgen.

In einer weiteren Ausführung gemäß Figur 5 befindet sich die optische Koppelstelle 11 nicht auf einer Oberfläche der optischen Komponente 10, sondern ist hier beispielhaft um eine Distanz d von der Oberfläche der optischen Komponente 10 versetzt angeordnet. Dieser Fall kann beispielsweise bei einer Facette des Wellenleiters 12 auftreten, die eine Ablage um die Distanz d bezüglich einer Chipkante 18 aufweist. In diesem Fall liegt eine Spitze des konischen Raumbereichs 15 innerhalb der optischen Komponente 10. Das Medium 19 steht dabei in direktem Kontakt mit der Oberfläche der optischen Komponente. 11 Die Lage der Chipkante 18 in Bezug auf die Lage der optischen Koppelstelle 11 lässt sich in diesem Fall durch ein abruptes Verschwinden oder einen abrupten Abfall der erfassten optischen Strahlung an der Chipkante 18 ermitteln.

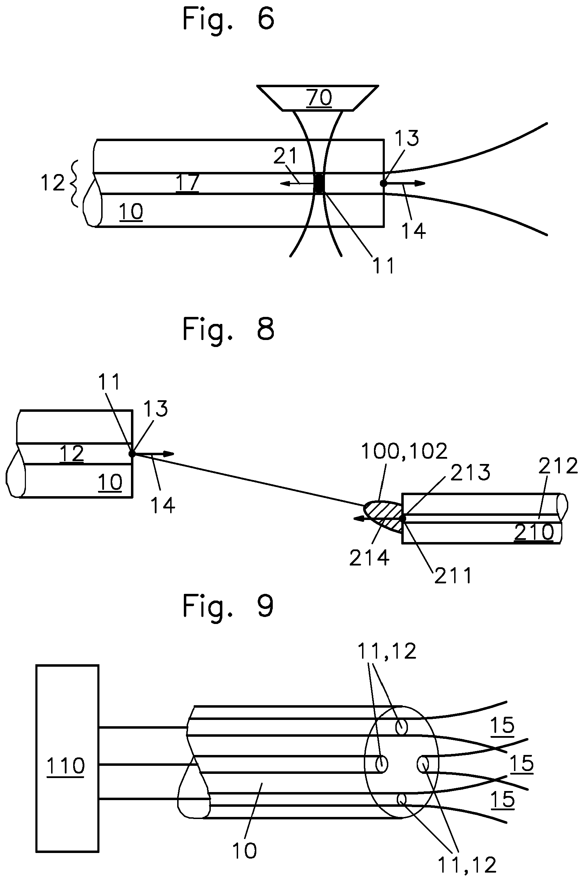

Figur 6 zeigt ein weiteres Ausführungsbeispiel, in dem die Erfassung der Position 13 und der Orientierung 14 der optischen Koppelstelle 11, die von dem Wellenleiter 12 der optischen Komponente 10 gebildet wird, durch Anregung von Lumineszenz-Strahlung 21 in einem Wellenleiterkern 17 eines Wellenleiters 12 selbst erfolgt. Der Wellenleiterkern 17 umfasst in diesem Fall bevorzugt eine Substanz, die zur Erzeugung der Lumineszenz-Strahlung 21 eingerichtet ist. Zusätzlich oder alternativ kann der Wellenleiterkern 17 eine weitere Substanz umfassen, die zur Erzeugung von Streustrahlung eingerichtet ist (nicht dargestellt).

Die Figuren 7 und 8 zeigen schematisch mit dem vorliegenden Verfahren zur Erzeugung einer Mikrostruktur an einer optischen Koppelstelle erzeugte Mikrostrukturen 100, die eine in Bezug auf die Position 13 und die Orientierung 14 präzise Ausrichtung an der optischen Koppelstelle 11 aufweisen.

Figur 7 zeigt eine an der Position 13 der optischen Koppelstelle 11 erzeugte Mikrostruktur 100 in Form eines dielektrischen Freiformwellenleiters 101, der auch als "Photonic Wire Bond" bezeichnet wird, wobei der dielektrische Freiformwellenleiter 101 in Bezug auf die Position 13 und die Orientierung 14 der optischen Koppelstelle 11 ausgerichtet ist.

Figur 8 zeigt eine weitere Mikrostruktur 100 in Form einer Mikrolinse 102, welche sich an einer weiteren optischen Koppelstelle 211, die von einem weiteren optischen Wellenleiter 212 einer weiteren optischen Komponente 210 gebildet wird, befindet, wobei die weitere optische Koppelstelle 211 nicht in direktem Kontakt mit der bereits erfassten optischen Koppelstelle 11, die von der optischen Komponente 10 umfasst wird, steht. Zur Ausgestaltung der Mikrostruktur 100 können hierbei auch Position 213 und Orientierung 214 der weiteren optischen Koppelstelle 211 herangezogen werden. Die Mikrostruktur 100 wird auf Basis der Positionen 13, 213 und der Orientierungen 14, 214 der beiden optischen Koppelstellen 11, 211 derart ausgestaltet, dass dadurch eine effiziente Kopplung zwischen den beiden optischen Koppelstellen 11, 211 entsteht. Zusätzlich zu dem Ausführungsbeispiel gemäß Figur 8 kann es für eine effiziente Kopplung auch vorteilhaft sein, Mikrostrukturen 100 an beiden optischen Koppelstellen 11, 211 zu erzeugen, wobei zur Ausgestaltung jeder der Mikrostrukturen 100 die Position und die Orientierung von beiden optischen Koppelstellen 11, 211 herangezogen wird.

Figur 9 zeigt ein weiteres Ausführungsbeispiel, in welchem eine Mehrzahl an optischen Koppelstellen 11 durch Facetten der Wellenleiterkerne 12 einer Mehrkernfaser festgelegt wird. In dieser Ausführung kann beispielsweise die insgesamt in alle Faserkerne eingekoppelte optische Strahlung durch die gemeinsame Messeinheit 110 integral ermittelt werden, deren aktive Fläche sich über alle Wellenleiterkerne der Mehrkernfaser erstreckt.

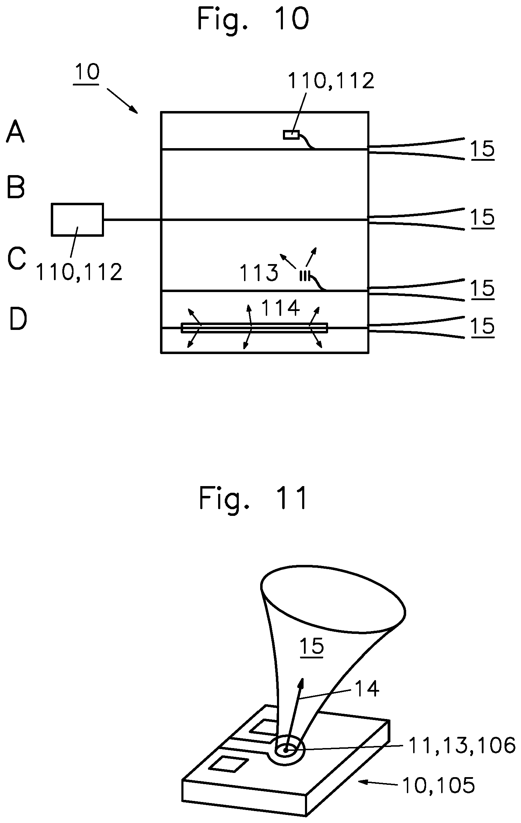

Figur 10 zeigt schematisch verschiedene bevorzugte Ausführungen zur Erfassung der in die optische Koppelstelle 11 der optischen Komponente 10 eingebrachten optischen Strahlung oder zur Einkopplung des Lichts, das zur Anregung der optischen Strahlung im Wechselwirkungsbereich 15 der optischen Koppelstelle 11 geeignet ist. Weitere, hier nicht dargestellte Ausführungen sind jedoch ebenfalls möglich.

In der Ausführung gemäß Figur 10A kann hierzu die optische Komponente 10 die Lichtquelle 112 oder die Messeinheit 110 umfassen, wobei die Lichtquelle 112 oder die Messeinheit 110 eine optische Verbindung mit der zu lokalisierenden optischen Koppelstelle 11 aufweist.

In der Ausführung gemäß Figur 10B kann hierzu die Lichtquelle 112 oder die Messeinheit 110 außerhalb der optischen Komponente 10 angeordnet sein und eine Verbindung mit der optischen Komponente 10, bevorzugt in Form eines optischen Wellenleiters oder einer Glasfaser, umfassen.

In der Ausführung gemäß Figur 10C kann die optische Komponente 10 Koppelstrukturen 113, z.B. in Form von so genannten Gitterkopplern, aufweisen, mit denen Licht oder die erfasste optische Strahlung aus der optischen Komponente 10 ausgekoppelt oder in die optische Komponente 10 eingekoppelt werden kann. Hierbei kann eingekoppeltes Licht oder ausgekoppelte optische Strahlung entweder durch das Lithographie-Objektiv 70 selbst, durch ein weiteres Objektiv (nicht dargestellt) oder durch ein weiteres optisches Element, bevorzugt eine optische Faser, oder eine Lichtquelle, bevorzugt eine Fotodiode (nicht dargestellt), erfasst oder bereitgestellt werden. Die Gitterkoppler können dabei so ausgelegt werden, dass sie eine hohe Koppeleffizienz für die Wellenlänge des im Rahmen des vorliegenden Verfahrens übertragenen Lichts oder der zugehörigen optischen Strahlung aufweisen, während sie optische Signale bei der Betriebswellenlänge der optischen Komponente 10 nicht oder nicht maßgeblich beeinflussen.

In der Ausführung gemäß Figur 10D kann eine innerhalb des Wellenleiters 12 auftretende Streustrahlung oder Lumineszenzstrahlung erfasst werden, bevorzugt mittels des Objektivs 70 selbst oder durch ein weiteres Objektiv. Die Erzeugung von Streustrahlung lässt sich hier durch geeignete Streustrukturen, beispielsweise auf Basis periodischer Strukturen, erreichen. Diese Strukturen können so ausgelegt werden, dass sie eine hohe Streueffizienz für die Wellenlänge des im Rahmen des vorliegenden Verfahrens übertragenen Lichts aufweisen, während sie optische Signale bei der Betriebswellenlänge der optischen Komponente 10 nicht oder nicht maßgeblich beeinflussen.

Figur 11 zeigt beispielhaft den Wechselwirkungsbereich 15 einer oberflächenbeleuchteten Fotodiode 105. Die optische Koppelstelle 11 entspricht hierbei einer aktiven Fläche 106 der Fotodiode 105, während der Normalenvektor der aktiven Fläche 106 der Fotodiode 105 üblicherweise als die Orientierung der optischen Koppelstelle 11 betrachtet wird.

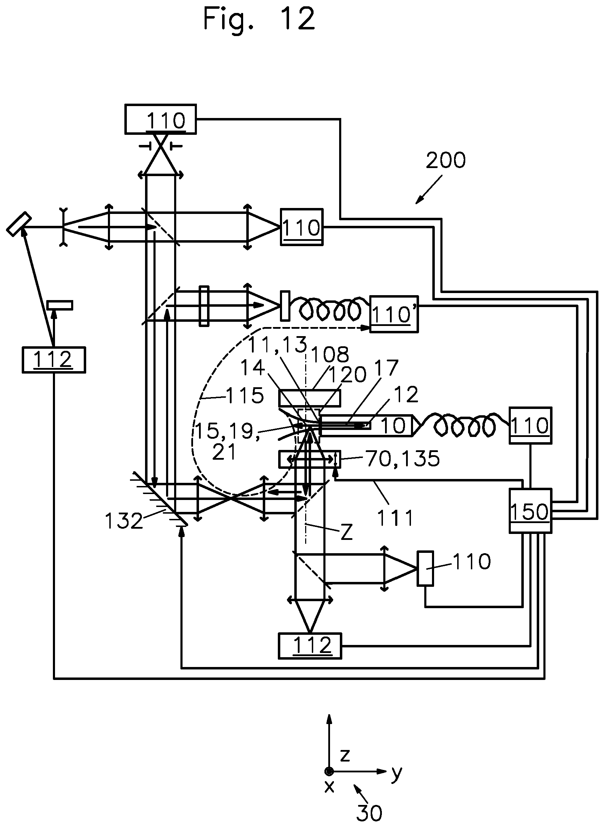

Figur 12 zeigt schematisch ein bevorzugtes Ausführungsbeispiel einer erfindungsgemäßen Anordnung 200 zur Lokalisierung der optischen Koppelstelle 11 in der optischen Komponente 10, die auf einem in x-, y- und z-Richtung verfahrbar eingerichteten optischen Tisch 108 angeordnet ist. Die Anordnung 200 basiert auf einem dreidimensionalen Laserlithographie-System mit schneller Strahlablenkung durch einen Strahlscanner 132, bevorzugt in Form eines so genannten "Galvo-Scanners", der um weitere Detektionskanäle für die optische Strahlung erweitert wurde. Die Lichtquelle 112 umfasst hierbei einen Femtosekunden-Laser, welcher eine Emissionswellenlänge von 780 nm, eine Pulsdauer von ca. 100 fs und eine Wiederholrate von ca. 100 MHz aufweist. Zur Umsetzung des Verfahrens zur Lokalisierung der optischen Koppelstelle 11 wird die Fluoreszenz-Strahlung 21 mittels Mehrphotonen-Anregung erzeugt, wobei das zur Anregung verwendete Licht teilweise durch den Strahlengang des Lithographiesystems in den Erzeugungsbereich 120 eingestrahlt wird. Das zur Anregung verwendete Licht kann dabei entweder von derselben Lichtquelle 112 erzeugt werden, die auch zur lithographischen Strukturierung verwendet wird, oder aber durch eine zusätzliche Lichtquelle, die sich über einen weiteren Strahlteiler in den Strahlengang einkoppeln lässt (nicht dargestellt). Als das Medium 19 dient hier ein Photoresist, dem zusätzlich Fluoreszenzfarbstoffe beigemischt werden können. Zur Lokalisierung der optische Koppelstelle 11 werden dabei ausgewählte Parameter, insbesondere die Leistung, die Wellenlänge und/oder die Pulsdauer des in das Medium 19 eingestrahlten Lichtes so eingestellt, dass die dadurch eingebrachte Dosis bevorzugt noch unterhalb der Dosisschwelle zu einer während der Detektion unerwünschten Polymerisation liegt. Ein Teil der innerhalb des Erzeugungsbereichs 120 erzeugten Fluoreszenz-Strahlung 21 koppelt dabei in die optische Koppelstelle 11 ein. Im vorliegenden Ausführungsbeispiel umfasst die optische Komponente den mindestens einen optischen Wellenleiter 12, beispielsweise in Form einer Glasfaser, der den mindestens einen Wellenleiterkern 17 umfasst. Der Wellenleiter 12 ist an die Messeinheit 110 angeschlossen, die hier in Form eines Photoverstärkers (engl. *photo multiplier tube)* ausgeführt sein kann, und welche die in den mindestens einen Wellenleiterkern 17 eingekoppelte Fluoreszenz-Strahlung 21 in Abhängigkeit von der räumlichen Position des zur Anregung verwendeten Fokuspunktes des Lithographie-Systems messtechnisch erfasst. Im Falle einer Mehrkernfaser lässt sich die Summe der in die verschiedenen Wellenleiterkerne 17 eingekoppelten FluoreszenzStrahlung 21 gemäß Figur 9 mittels der Messeinheit 110 in Form eines Photoverstärkers integral erfassen.

Alternativ dazu kann die zur Anregung der optischen Strahlung geeignete Lichtquelle 112 an mindestens einen der Wellenleiterkerne 17 angeschlossen werden (nicht dargestellt). Die optische Strahlung wird dann durch das Objektiv 70 erfasst und über eine als Fluoreszenzpfad 115 bezeichnete Anordnung einer weiteren Messeinheit 110' in Form eines Photoverstärkers zugeführt. Der gesamte Fluoreszenzpfad 115 wird in dieser Ausführung durch das Objektiv 70 und die diesem vorgeschalteten Linsen sowie Strahlteiler gebildet und kann zusätzlich den Strahlscanner 132 enthalten. Das zeitaufgelöste Signal der Messeinheiten 110, 110' wird digitalisiert. Aus den mittels des Strahlscanners 132 eingestellten und damit bekannten Fokuspositionen in allen drei Raumrichtungen lässt sich so die erfasste optische Strahlung ortsaufgelöst ermitteln und hieraus die Orientierung und Position des mindestens einen Wellenleiterkerns 17 bestimmen.

Darüber hinaus kann, wie in Figur 12 schematisch dargestellt, die Anordnung 200 weitere optische, optoelektronische oder elektronische Elemente umfassen, insbesondere weitere Messeinheiten 110, Lichtquellen 112, Linsen, Spiegel, Strahlteiler oder Filter.

Die Anordnung 200 wurde erfolgreich zur Vermessung der Position 13 und der Orientierung 14 der optischen Koppelstelle 11 von Einzelkernfasern und Mehrkernfasern eingesetzt. Ziel eines Ausführungsbeispiels war die Erkennung der Koppelstellen 11 einer Siebenkernfaser. Im Gegensatz zu üblichen Einzelkernfasern sind Mehrkernfasern nicht symmetrisch in Bezug auf eine beliebige Rotation um eine Faserachse, so dass die Position 13 der Wellenleiterkerne 17 nach ihrer Montage zumeist unbestimmt bleibt. Zur Detektion der Wellenleiterkerne 17 wurde Mehrphotonen-Fluoreszenzstrahlung mittels des Lithographie-Objektivs 70 in einem einer Endfacette der Mehrkernfaser vorgelagerten Volumen angeregt und mittels der an die Mehrkernfaser angeschlossenen Messeinheit 110 in Form eines Photoverstärkers integral über alle sieben Wellenleiterkerne 17 erfasst. Zur Messung der ortaufgelösten Verteilung der Fluoreszenz-Strahlung wurde der anregende Lichtstrahl zunächst lateral mittels des Strahlscanners 132 in einer Fokusebene des Lithographie-Objektivs 70 bewegt. Darüber hinaus wurde mittels einer axialen Verschiebung des Objektivs in z-Richtung durch den Objektivtrieb 135 die Fokusebene selbst relativ zur der optischen Mehrkernfaser bewegt. Aus der dreidimensional ortsaufgelösten Verteilung der durch die Mehrkernfaser erfassten Fluoreszenzstrahlung lassen sich die Position 13 und die Orientierung 14 der den einzelnen Wellenleiterkernen 17 zugeordneten optischen Koppelstellen 11 ermitteln. Zusätzlich kann ein Teil der angeregten Fluoreszenzstrahlung durch das Lithographie-Objektiv 70 selbst erfasst und zur Bildgebung verwendet werden. So können die aufgenommenen Messdaten in der Auswerteeinheit 150 sowohl dazu verwendet werden, die Topologie der optischen Komponente 10 zu bestimmen als auch dazu dienen, zu einer verfeinerten Bestimmung der Position 13 und der Orientierung 14 der optischen Koppelstelle 11 zu gelangen.

Die in Figur 12 dargestellte Anordnung lässt sich in leicht abgewandelter Form auch zur Umsetzung des Verfahrens zur Erzeugung einer Mikrostruktur (hier nicht dargestellt) an der optischen Koppelstelle 11 verwenden. Dazu können die Parameter, insbesondere die Wellenlänge, die Leistung oder die Pulsdauer des durch die Lichtquelle 112 abgestrahlten Lichtes derart variiert werden, dass eine Polymerisation eines Photoresists im einem Raumelement in der Umgebung des Fokuspunkts des Lithographiestrahls möglich wird. Durch eine Bewegung des Fokuspunktes unter gleichzeitiger Variation des eingestrahlten Lichtes lassen sich damit räumlich selektiv verfestigte Volumenbereiche erzeugen, die in ihrer Gesamtheit die gewünschte Mikrostruktur bilden. Die Polymerisation kann dabei auf Ein- oder Mehrphotonenabsorptionsprozessen beruhen. In einer besonderen Ausführung kann die Lichtquelle einen Femtosekundenlaser umfassen, dessen Ausgangsleistung entweder direkt oder mittels eines externen Modulators, bevorzugt einem akusto-optischen Modulators, variiert werden. Zusätzlich kann die Lichtquelle einen einstellbaren Pulskompressor umfassen, mit dem sich die Pulsdauer des in den Photoresist eingestrahlten Lichtes variieren lässt.

In einer Darstellung der Verteilung der durch die Mehrkernfaser hindurch nachgewiesenen Zweiphotonen-Fluoreszenzleistung in einer Ebene auf der Höhe des zentralen Wellenleiterkerns 17 senkrecht zur z-Richtung, welcher der Richtung entlang der optischen Achse des Lithographie-Objektivs 70 entspricht, kann die Fluoreszenz am Übergang zwischen dem Medium 19 und der Faserfacette abrupt abfallen, da innerhalb der optischen Komponente 10 keine Anregung von Zweiphotonen-Fluoreszenz möglich ist. Der abrupte Abfall der erfassten optischen Strahlung kann dabei zu einer präzisen Lokalisierung der als die optische Koppelstelle 11 dienenden Faserfacette herangezogen werden. Durch Aufnahme eines Stapels von Bildern an unterschiedlichen z-Positionen lässt sich so eine dreidimensional ortsaufgelöste Erfassung der Zweiphotonen-Fluoreszenz über ein Volumen erreichen. Dadurch werden auch virtuelle Schnitte in Ebenen senkrecht zu einer Achse der Mehrkernfasern möglich, in denen deutlich die sieben Kerne der Mehrkernfaser zu erkennen sind. Besonders bemerkenswert ist hierbei, dass sich der Querschnitt der Faserkerne aus der Verteilung der Lumineszenz-Strahlung 21 direkt an der optischen Koppelstelle 11 präzise ableiten lässt. Zusätzlich kann analog eine räumliche Verteilung des durch das Lithographie-Objektiv 70 selbst erfassten Teils der Lumineszenz-Strahlung 21 in einem Bildstapel aus unterschiedlichen Fokushöhen erfasst werden, woraus zwar die Topologie der Faser, jedoch nicht die Positionen 13 der jeweiligen Koppelstellen 11 zu erkennen ist.

### Bezugszeichenliste

- 10, 210: optische Komponente
- 11, 211: optische Koppelstelle
- 12, 212: Optischer Wellenleiter (Faser), zugehörig zur Koppelstelle
- 13, 213: Position der Koppelstelle
- 14, 214: Richtung der Koppelstelle
- 15: Wechselwirkungsbereich der Koppelstelle
- 16: Punkt im Überlappungsbereich
- 17: Wellenleiterkern
- 18: Chipkante
- 19: Medium (Wechselwirkungsmedium)
- 20: Substanz, eingerichtet zur Erzeugung von Lumineszenz
- 21: Lumineszenz-Strahlung (Fluoreszenz-Strahlung)
- 25: Substanz, eingerichtet zur Erzeugung von Streuung
- 26: Streustrahlung
- 27: Streuzentrum
- 30: Koordinatensystem
- 40: erzeugte Mikrostruktur
- 50: Fokussierter Laserstrahl zur Erzeugung der Lumineszenz
- 51: Fokuspunkt
- 60: Bildgebender Fokuskegel des Lithographie-Objektivs
- 61: Fokuspunkt
- 70: Objektiv (Lithographie-Objektiv)
- 100: Mikrostruktur
- 101: ausgerichteter dielektrischer Wellenleiter
- 102: ausgerichtete Mikrolinse
- 105: oberflächenbeleuchtete Photodiode
- 106: aktive Fläche der oberflächenbeleuchteten Photodiode
- 108: optischer Tisch
- 110, 110': Messeinheit
- 111: optisches System zur Erzeugung oder Erfassung optischer Strahlung
- 112: Lichtquelle (Pulslichtquelle)
- 113: Koppelstruktur
- 114: Streuung durch den Wellenleiter
- 115: Fluoreszenzpfad
- 120: Erfassungsbereich der optischen Strahlung
- 130: Erzeugungsbereich der optischen Strahlung
- 132: Strahlscanner
- 135: Objektivtrieb
- 150: Auswerteeinheit
- 200: Anordnung zur Lokalisierung einer optischen Koppelstelle

## Patentansprüche

1. Verfahren zur Lokalisierung einer optischen Koppelstelle (11), umfassend die folgenden Schritte:
a) Bereitstellen einer optischen Komponente (10), welche eine optische Koppelstelle (11) umfasst, wobei die optische Koppelstelle einen Wechselwirkungsbereich (15) aufweist, der außerhalb eines von der optischen Komponente (10) umfassten Volumens liegt;
b) Erzeugen einer optischen Strahlung in einem Erzeugungsbereich (120), wobei der Erzeugungsbereich (120) zumindest teilweise mit dem Wechselwirkungsbereich (15) der optischen Koppelstelle (11) überlappt, wobei ein sich in dem Erzeugungsbereich (120) befindliches Medium (19) mit Licht beaufschlagt wird, das derart von dem Medium (19) modifiziert wird, dass dadurch das Erzeugen der optischen Strahlung erfolgt;
c) Erfassen zumindest eines Teils der erzeugten optischen Strahlung in einem Erfassungsbereich (130), wobei der Erfassungsbereich (130) zumindest teilweise mit dem Wechselwirkungsbereich (15) der optischen Koppelstelle (11) überlappt, und Ermitteln einer ortsaufgelösten Verteilung des erfassten Teils der erzeugten optischen Strahlung; und
d) Bestimmen der Lokalisierung der optischen Koppelstelle (11) aus der ermittelten ortsaufgelösten Verteilung des erfassten Teils der erzeugten optischen Strahlung,
**dadurch gekennzeichnet,**
**dass** das Erfassen zumindest des Teils der erzeugten optischen Strahlung durch die optische Koppelstelle (11) hindurch erfolgt.

2. Verfahren nach dem vorangehenden Anspruch, wobei das Medium (19) Streuzentren (27) umfasst, wobei die Streuzentren (27) Streustrahlung (26) erzeugen.

3. Verfahren nach Anspruch 1, wobei das Medium (19) eine lumineszierende Substanz (20) oder einen die lumineszierende Substanz (20) bildenden Fotoinitiator umfasst, wobei die lumineszierende Substanz (20) Lumineszenz-Strahlung (21) erzeugt.

4. Verfahren nach dem vorangehenden Anspruch, wobei die Lumineszenz-Strahlung (21) durch Anregung eines Mehrphotonen-Absorptionsprozesses in der lumineszierenden Substanz (20) erzeugt wird.

5. Verfahren nach einem der beiden vorangehenden Ansprüche, wobei das Medium (19) weiterhin einen Fotolack umfasst, wobei zur Erzeugung der optischen Strahlung eine Dosis in den Fotolack eingebracht wird, die unterhalb einer Dosisschwelle zur Polymerisation des Fotolacks liegt.

6. Verfahren nach einem der vorangehenden Ansprüche, wobei das Erfassen der optischen Strahlung oder eine Einstrahlung des Lichts zur Erzeugung der optischen Strahlung im Erzeugungsbereich (120) durch ein Objektiv (70) erfolgt, wobei das Objektiv (70) eine numerische Apertur von mindestens 0,3 aufweist.

7. Verfahren nach einem der vorangehenden Ansprüche, wobei die Einstrahlung des Lichts in den Erzeugungsbereich (120) oder die Erfassung der erzeugten optischen Strahlung in dem Erfassungsbereich (130) räumlich verändert wird, und wobei das Erfassen der ortsaufgelösten Verteilung der optischen Strahlung durch die optische Koppelstelle (11) hindurch erfolgt.

8. Verfahren nach dem vorangehenden Anspruch, wobei die räumliche Änderung der Einstrahlung des Lichts in den Erzeugungsbereich (120) oder die Erfassung der erzeugten optischen Strahlung in dem Erfassungsbereich (130) mittels eines Strahlscanners (132) erfolgt.

9. Verfahren nach einem der vorangehenden Ansprüche, wobei die Lokalisierung der optischen Koppelstelle (11) eine Angabe von Position (13) und Orientierung (14) der optischen Koppelstelle (11) umfasst, wobei das Bestimmen der Position (13) und der Orientierung (14) der optischen Koppelstelle (11) durch mindestens eine der folgenden Maßnahmen erfolgt:
- Nachweis eines Auftretens oder Verschwindens der erfassten optischen Strahlung an einem Ort innerhalb des Erfassungsbereichs (130);
- Auswerten der ortsaufgelösten Verteilung des erfassten Teils der erzeugten optischen Strahlung in dem Erfassungsbereich (130);
- Anwendung eines Modells für die optische Koppelstelle (11), für eine positionsabhängige Einkopplung der optischen Strahlung im Erzeugungsbereich (120) in die optische Koppelstelle (11) oder für eine Verteilung des zur Erzeugung der optischen Strahlung aus der optischen Koppelstelle (11) abgestrahlten Lichts.

10. Verfahren zur Erzeugung einer Mikrostruktur (100) an einer optischen Koppelstelle (11) einer optischen Komponente (10), mit den Schritten:
i) Lokalisierung einer optischen Koppelstelle (11) gemäß dem Verfahren nach einem der vorangehenden Ansprüche; und
ii) Erzeugen einer Mikrostruktur (100) an der optischen Koppelstelle (11) mittels eines Fertigungsverfahrens ausgewählt aus einem additiven Fertigungsverfahren oder einem subtraktiven Fertigungsverfahren.

11. Verfahren nach dem vorangehenden Anspruch, wobei ein Objektiv (70) sowohl zur Lokalisierung der optischen Koppelstelle (11) als auch zum Erzeugen der Mikrostruktur (100) an der optischen Koppelstelle (11) eingesetzt wird, wobei das Objektiv eine numerische Apertur von mindestens 0,3 aufweist.

12. Anordnung (200) zur Lokalisierung einer optischen Koppelstelle (11), umfassend
- eine optische Komponente (10), welche mindestens eine optische Koppelstelle (11) umfasst, wobei die optische Koppelstelle einen Wechselwirkungsbereich (15) aufweist, der außerhalb eines von der optischen Komponente (10) umfassten Volumens liegt;
- eine optische Einrichtung, die zur Erzeugung von optischer Strahlung in einem Erzeugungsbereich (120) und/oder zur Erfassung zumindest eines Teils der erzeugten optischen Strahlung in einem Erfassungsbereich (130) eingerichtet ist, wobei der Erzeugungsbereich (120) und der Erfassungsbereich (130) zumindest teilweise mit dem Wechselwirkungsbereich (15) der optischen Koppelstelle (11) überlappen; und
- eine Auswerteeinheit (150), welche zur Ermittlung einer ortsaufgelösten Verteilung eines erfassten Teils der optischen Strahlung und zur Bestimmung der Lokalisierung der optischen Koppelstelle (11) aus der ermittelten ortsaufgelösten Verteilung des erfassten Teils der optischen Strahlung eingerichtet ist,
**dadurch gekennzeichnet,**
**dass** die Anordnung derart eingerichtet ist, dass das Erfassen zumindest des Teils der erzeugten optischen Strahlung durch die optische Koppelstelle (11) hindurch erfolgt.

13. Anordnung (200) nach dem vorangehenden Anspruch, wobei die optische Einrichtung eine Lichtquelle (112) umfasst, die zur Erzeugung von Licht eingerichtet ist, das bei Beaufschlagung eines sich in dem Erzeugungsbereich (120) befindlichen Mediums (19) derart von dem Medium (19) modifiziert wird, dass dadurch das Erzeugen der optischen Strahlung erfolgt.

14. Anordnung (200) nach einem der beiden vorangehenden Ansprüche, wobei die optische Einrichtung weiterhin einen Strahlscanner (132) umfasst, der dazu eingerichtet ist, eine räumliche Änderung der Einstrahlung des Lichts in den Erzeugungsbereich (120) oder der Erfassung der erzeugten optischen Strahlung in dem Erfassungsbereich (130) zu bewirken.

15. Anordnung (200) nach einem der drei vorangehenden Ansprüche, wobei die optische Einrichtung weiterhin zur Erzeugung einer Mikrostruktur (100) an der optischen Koppelstelle (11) eingerichtet ist.

## Claims

1. Method for localizing an optical coupling point (11), comprising the following steps:
a) providing an optical component (10) comprising an optical coupling point (11), wherein the optical coupling point has an interaction region (15) located outside a volume encompassed by the optical component (10);
b) producing optical radiation in a production region (120), wherein the production region (120) at least partly overlaps with the interaction region (15) of the optical coupling point (11), wherein light impinges on a medium (19) located in the production region (120), said light being modified by the medium (19) in such a manner that the optical radiation is thereby produced;
c) capturing at least one part of the produced optical radiation in a capture region (130), wherein the capture region (130) at least partly overlaps with the interaction region (15) of the optical coupling point (11), and ascertaining a spatially resolved distribution of the captured part of the produced optical radiation; and
d) determining the localization of the optical coupling point (11) from the ascertained spatially resolved distribution of the captured part of the produced optical radiation,
**characterized in**
**that** capturing at least the part of the produced optical radiation is effected through the optical coupling point (11).

2. Method according to the preceding claim, wherein the medium (19) comprises scattering centers (27), wherein the scattering centers (27) produce scattered radiation (26).

3. Method according to claim 1, wherein the medium (19) comprises a luminescent substance (20) or a photoinitiator that forms the luminescent substance (20), wherein the luminescent substance (20) produces luminescence radiation (21).

4. Method according to the preceding claim, wherein the luminescence radiation (21) is produced by excitation of a multi-photon absorption process in the luminescent substance (20).

5. Method according to either of the two preceding claims, wherein the medium (19) furthermore comprises a photoresist, wherein a dose that is below a dose threshold for polymerization of the photoresist is introduced into the photoresist for a purpose of producing the optical radiation.

6. Method according to any one of the preceding claims, wherein capturing the optical radiation or radiating the light for producing the optical radiation in the production region (120) is effected through an objective (70), wherein the objective (70) has a numerical aperture of at least 0.3.

7. Method according to any one of the preceding claims, wherein the radiating of the light into the production region (120) or the capture of the produced optical radiation in the capture region (130) is spatially altered, and wherein capturing the spatially resolved distribution of the optical radiation is effected through the optical coupling point (11).

8. Method according to the preceding claim, wherein the spatial change of the radiating of the light into the production region (120) or the capture of the produced optical radiation in the capture region (130) is effected by using a beam scanner (132).

9. Method according to any one of the preceding claims, wherein the localization of the optical coupling point (11) comprises an indication of position (13) and orientation (14) of the optical coupling point (11), wherein the position (13) and the orientation (14) of the optical coupling point (11) are determined by at least one of the following measures:
- verifying an appearance or a disappearance of the captured optical radiation at a location within the capture region (130);
- evaluating the spatially resolved distribution of the captured part of the produced optical radiation in the capture region (130);
- applying a model for the optical coupling point (11), for a position-dependent input coupling of the optical radiation in the production region (120) into the optical coupling point (11) or for a distribution of the light emitted from the optical coupling point (11) for the purpose of producing the optical radiation.

10. Method for producing a microstructure (100) at an optical coupling point (11) of an optical component (10), comprising the following steps:
i) localizing an optical coupling point (11) in accordance with the method according to any one of the preceding claims; and
ii) producing a microstructure (100) at the optical coupling point (11) by using a manufacturing method selected from an additive manufacturing method or a subtractive manufacturing method.

11. Method according to the preceding claim, wherein one objective (70) is used both for localizing the optical coupling point (11) and for producing the microstructure (100) at the optical coupling point (11), wherein the objective has a numerical aperture of at least 0.3.

12. Arrangement (200) for localizing an optical coupling point (11), comprising
- an optical component (10) comprising at least one optical coupling point (11), wherein the optical coupling point has an interaction region (15) located outside a volume encompassed by the optical component (10);
- an optical device configured for producing optical radiation in a production region (120) and/or for capturing at least one part of the produced optical radiation in a capture region (130), wherein the production region (120) and the capture region (130) at least partly overlap with the interaction region (15) of the optical coupling point (11); and
- an evaluation unit (150) configured for ascertaining a spatially resolved distribution of a captured part of the optical radiation and for determining the localization of the optical coupling point (11) from the ascertained spatially resolved distribution of the captured part of the optical radiation,
**Characterized in**
**that** the arrangement is configured in such a manner that capturing at least the part of the produced optical radiation is effected through the optical coupling point (11).

13. Arrangement (200) according to the preceding claim, wherein the optical device comprises a light source (112) configured for producing light which, upon impinging on a medium (19) located in the production region (120), is modified by the medium (19) in such a manner that the optical radiation is thereby produced.

14. Arrangement (200) according to either of the two preceding claims, wherein the optical device furthermore comprises a beam scanner (132) configured for effecting a spatial change of the radiating of the light into the production region (120) or of the capture of the produced optical radiation in the capture region (130).

15. Arrangement (200) according to any one of the three preceding claims, wherein the optical device is furthermore configured for producing a microstructure (100) at the optical coupling point (11).

## Revendications

1. Procédé de localisation d'un point de couplage optique (11), comprenant les étapes suivantes :
a) fourniture d'un composant optique (10), qui comprend un point de couplage optique (11), le point de couplage optique comportant une zone d'interaction (15), qui est située à l'extérieur d'un volume délimité par le composant optique (10) ;
b) production d'un rayonnement optique dans une zone de production (120), la zone de production (120) chevauchant au moins en partie la zone d'interaction (15) du point de couplage optique (11), un milieu (19) se trouvant dans la zone de production (120) étant soumis à l'action d'une lumière qui est modifiée par le milieu (19) de telle manière que la production du rayonnement optique est ainsi effectuée ;
c) détection d'au moins une partie du rayonnement optique produit dans une zone de détection (130), la zone de détection (130) chevauchant au moins en partie la zone d'interaction (15) du point de couplage optique (11), et détermination d'une répartition à résolution spatiale de la partie détectée du rayonnement optique produit ; et
d) définition de la localisation du point de couplage optique (11) à partir de la répartition à résolution spatiale déterminée de la partie détectée du rayonnement optique produit,
**caractérisé en ce**
**que** la détection d'au moins la partie du rayonnement optique produit est effectuée à travers le point de couplage optique (11).

2. Procédé selon la revendication précédente, le milieu (19) comprenant des centres de diffusion (27), les centres de diffusion (27) produisant un rayonnement diffus (26).

3. Procédé selon la revendication 1, le milieu (19) comprenant une substance luminescente (20) ou un photoinitiateur formant la substance luminescente (20), la substance luminescente (20) produisant un rayonnement luminescent (21).

4. Procédé selon la revendication précédente, le rayonnement luminescent (21) étant produit par excitation d'un processus d'absorption de photons multiples dans la substance luminescente (20).

5. Procédé selon l'une des deux revendications précédentes, le milieu (19) comprenant par ailleurs une résine photosensible, une dose, qui est inférieure à un seuil de dose pour polymériser la résine photosensible, étant introduite dans la résine photosensible pour produire le rayonnement optique.

6. Procédé selon l'une des revendications précédentes, la détection du rayonnement optique ou une radiation incidente de la lumière pour produire le rayonnement optique dans la zone de production (120) étant effectuée par un objectif (70), l'objectif (70) présentant une ouverture numérique d'au moins 0,3.

7. Procédé selon l'une des revendications précédentes, la radiation incidente de la lumière dans la zone de production (120) ou la détection du rayonnement optique produit dans la zone de détection (130) étant modifiée spatialement, et la détection de la répartition à résolution spatiale du rayonnement optique étant effectuée à travers le point de couplage optique (11).

8. Procédé selon la revendication précédente, la modification spatiale de la radiation incidente de la lumière dans la zone de production (120) ou la détection du rayonnement optique produit dans la zone de détection (130) étant effectuée au moyen d'un scanner de faisceau (132).

9. Procédé selon l'une des revendications précédentes, la localisation du point de couplage optique (11) comprenant une indication de position (13) et d'orientation (14) du point de couplage optique (11), la définition de la position (13) et de l'orientation (14) du point de couplage optique (11) étant effectuée par au moins une des mesures suivantes :
- mise en évidence d'une apparition ou d'une disparition du rayonnement optique détecté sur un emplacement à l'intérieur de la zone de détection (130) ;
- évaluation de la distribution à résolution spatiale de la partie détectée du rayonnement optique produit dans la zone de détection (130) ;
- application d'un modèle pour le point de couplage optique (11), pour un couplage dépendant de la position du rayonnement optique dans la zone de production (120) dans le point de couplage optique (11) ou pour une répartition de la lumière émise depuis le point de couplage optique (11) pour produire le rayonnement optique.

10. Procédé de production d'une microstructure (100) sur un point de couplage optique (11) d'un composant optique (10), avec les étapes :
i) localisation d'un point de couplage optique (11) selon le procédé selon l'une des revendications précédentes ; et
ii) production d'une microstructure (100) sur le point de couplage optique (11) au moyen d'un procédé de production choisi parmi un procédé de fabrication additive ou un procédé de fabrication soustractive.

11. Procédé selon la revendication précédente, un objectif (70) étant utilisé aussi bien pour localiser le point de couplage optique (11) que pour produire la microstructure (100) sur le point de couplage optique (11), l'objectif présentant une ouverture numérique d'au moins 0,3.

12. Ensemble (200) de localisation d'un point de couplage optique (11), comprenant
- un composant optique (10), qui comprend au moins un point de couplage optique (11), le point de couplage optique comportant une zone d'interaction (15), qui est située à l'extérieur d'un volume délimité par le composant optique (10) ;
- un dispositif optique, qui est mis au point pour produire un rayonnement optique dans une zone de production (120) et/ou pour détecter au moins une partie du rayonnement optique produit dans une zone de détection (130), la zone de production (120) et la zone de détection (130) chevauchant au moins en partie la zone d'interaction (15) du point de couplage optique (11) ; et
- une unité d'évaluation (150), qui est mise au point pour déterminer une répartition à résolution spatiale d'une partie détectée du rayonnement optique et pour définir la localisation du point de couplage optique (11) à partir de la répartition à résolution spatiale déterminée de la partie détectée du rayonnement optique, **caractérisé en ce**
**que** l'ensemble est mis au point de telle manière que la détection d'au moins la partie du rayonnement optique produit est effectuée à travers le point de couplage optique (11).

13. Ensemble (200) selon la revendication précédente, le dispositif optique comprenant une source de lumière (112), qui est mise au point pour produire de la lumière qui, lorsqu'un milieu (19) situé dans la zone de production (120) est soumis à une action, est modifiée par le milieu (19) de telle manière que la production du rayonnement optique est ainsi effectuée.

14. Ensemble (200) selon l'une des deux revendications précédentes, le dispositif optique comprenant par ailleurs un scanner de faisceau (132), qui est mis au point pour provoquer une modification spatiale de la radiation incidente de la lumière dans la zone de production (120) ou de la détection du rayonnement optique produit dans la zone de détection (130).

15. Ensemble (200) selon l'une des trois revendications précédentes, le dispositif optique étant en outre mis au point pour produire une microstructure (100) sur le point de couplage optique (11).
